(19) Europäisches Patentamt
European Patent Office
Office européen des brevets

(11) EP 2 006 314 B2

(12) NEW EUROPEAN PATENT SPECIFICATION
After opposition procedure

(45) Date of publication and mention of the opposition decision:
**31.07.2019 Bulletin 2019/31**

(45) Mention of the grant of the patent:
**19.09.2012 Bulletin 2012/38**

(21) Application number: **07739740.4**

(22) Date of filing: **27.03.2007**

(51) Int Cl.:
***C08F 297/08*** *(2006.01)* ***C08L 53/00*** *(2006.01)*

(86) International application number:
**PCT/JP2007/056302**

(87) International publication number:
**WO 2007/116709 (18.10.2007 Gazette 2007/42)**

# (54) PROPYLENE RANDOM BLOCK COPOLYMER, RESIN COMPOSITIONS CONTAINING THE COPOLYMER, AND MOLDINGS OF BOTH

STATISTISCH AUFGEBAUTES PROPYLENBLOCKCOPOLYMER, DAS COPOLYMER ENTHALTENDE HARZZUSAMMENSETZUNGEN UND FORMKÖRPER AUS BEIDEN

COPOLYMERE DE PROPYLENE SEQUENCE STATISTIQUE, COMPOSITIONS DE RESINE LE CONTENANT ET PRODUITS DE MOULAGE A PARTIR D'EUX

(84) Designated Contracting States:
**BE DE IT NL**

(30) Priority: **29.03.2006 JP 2006092184**
**29.03.2006 JP 2006092185**

(43) Date of publication of application:
**24.12.2008 Bulletin 2008/52**

(73) Proprietors:
- **Mitsui Chemicals, Inc.**
**Tokyo 105-7117 (JP)**
- **Prime Polymer Co., Ltd.**
**Tokyo 105-7117 (JP)**

(72) Inventors:
- **ITAKURA, Keita**
**Chiba 2990265 (JP)**
- **HASHIZUME, Satoshi**
**Osaka 5928501 (JP)**
- **TAKESUE, Kunihiko**
**Chiba 2990265 (JP)**
- **FUNAYA, Munehito**
**Chiba 2990265 (JP)**

(74) Representative: **J A Kemp**
**14 South Square**
**Gray's Inn**
**London WC1R 5JJ (GB)**

(56) References cited:

| | |
|---|---|
| EP-A1- 1 428 853 | EP-A1- 1 829 903 |
| JP-A- H10 182 924 | JP-A- 2001 220 471 |
| JP-A- 2002 275 342 | JP-A- 2002 356 526 |
| JP-A- 2004 051 801 | JP-A- 2005 015 772 |
| JP-A- 2005 132 979 | JP-A- 2005 132 992 |
| JP-A- 2005 248 156 | JP-A- 2005 314 621 |
| JP-A- 2005 314 621 | JP-A- 2006 008 983 |
| JP-A- 2006 028 449 | JP-A- 2006 188 562 |
| JP-A- 2006 188 563 | JP-A- 2006 307 060 |
| JP-A- 2006 307 072 | JP-A- 2006 307 120 |

- **Extract from Kenjyusha's New Japanese-English Dictionary, fourth edition, fortieth impression, 2001**
- **Paulik Ch. et al: "Weiche, zähelastische PP-Copolymere", Standardkunstoffe, vol. 86, no. 8 , pages 1150-1152,**
- **Declaration of the Japanese translation Ken NAKAI**
- **Declaration of Masahiro Nanjo**

EP 2 006 314 B2

## Description

TECHNICAL FIELD

The invention relates to a propylene random block copolymer, a polypropylene resin composition containing the copolymer and a molded article formed thereof.

BACKGROUND ART

A polypropylene resin is generally excellent in chemical properties, mechanical properties and molding workability and is inexpensive; accordingly, it is in wide use. For instance, a propylene random copolymer produced by copolymerizing propylene and ethylene by use of a Ziegler-Natta catalyst is excellent in transparency, light weight properties, flexibility and heat resistance; accordingly it is in wide use as films or sheets such as heat seal films and shrink films for packaging foods, injection molding applications such as storage bins, food containers and medical containers, hollow molding applications such as home detergent containers, and injection stretch blow molding applications such as beverage containers and seasoning containers. However, recently, replacements of other plastic materials based on weight reduction, energy saving by improvement in a molding process efficiency based on reduction of $CO_2$ emission and pursuits of comforts due to diversification in life styles are socially demanded; accordingly, it is necessitated to develop a polypropylene resin that has functions higher than those of a conventional propylene random copolymer.

In accordance with the development demands, inventions relating to a propylene random copolymer produced in the presence of a metallocene catalyst are disclosed. For instance, in Japanese Patent Application Laid-Open Publication No. H02-173016, it is disclosed to apply a low melting point propylene random copolymer to a low temperature heat seal agent. According to a method disclosed in the publication, a heat seal step for various packages may be shortened. However, according to the method disclosed therein, a solidification speed during the film formation is slow; accordingly, it is necessary to improve a film cooling step, and in addition, further lower temperature heat sealability is demanded in the case of some food package. Japanese Patent Application Laid-Open Publication No. 2002-249167 discloses an application of a low melting point propylene random copolymer to films for heat shrink labels. According to a method disclosed in the publication, there is a problem in that although thermal shrinkage rate is large, rigidity of the film is deteriorated.

Furthermore, Japanese Patent Application Laid-Open Publication No. H06-192332 discloses an application of a metallocene catalyzed propylene random copolymer to injection molded articles. A method disclosed in the publication gives injection molded articles excellent in rigidity and transparency. However, impact resistance is problematically poor.

As a method of improving defects of a propylene random copolymer produced in the presence of a metallocene catalyst, it is considered to add an elastomer component to the propylene random copolymer. Herein, for instance, Japanese Patent Application National Publication (Laid-open) No. 2005-529227 and Japanese Patent Application Laid-Open Publication No. 2005-132979 disclose a producing method that takes simplification of the producing steps and energy saving into consideration. The publications disclose a propylene random block copolymer that is produced in such a manner that, in the presence of a metallocene catalyst, a copolymer of propylene and ethylene is prepared in a first step and a copolymer elastomer of propylene and ethylene which contains more ethylene than the copolymer prepared in the first step is produced in a second step, and a producing method thereof. However, the propylene random block copolymers disclosed in the publications, due to the respective catalyst performances, are lower in the molecular weight of the propylene-ethylene copolymer elastomer produced in the second step; accordingly, it is difficult to achieve physical properties such as the impact resistance and the tear strength, while maintaining the characteristics of the propylene random block copolymer that rigidity is high and characteristics such as blocking properties are excellent.

Patent Document 1: Japanese Patent Application Laid-Open Publication No. H02-173016 Patent Document 2: Japanese Patent Application Laid-Open Publication No. 2002-249167
Patent Document 3: Japanese Patent Application Laid-Open Publication No. H06-192332
Patent Document 4: Japanese Patent Application National Publication (Laid-open) No. 2005-529227
Patent Document 5: Japanese Patent Application Laid-Open Publication No. 2005-132979

DISCLOSURE OF THE INVENTION

The invention relates to a propylene random block copolymer or a resin composition containing the copolymer that has overcome the above-mentioned problems. Objects of the invention are to provide films, sheets and laminates suitably used as a sealant packaging material for materials to be packaged such as foods, to provide injection molded articles, hollow molded articles and injection blow molded articles which are suitably used in food containers and the

like to which heat resistance, transparence and impact resistance are particularly necessary, and to provide molded articles such as food containers and medical instruments, and fibers.

## MEANS TO SOLVE THE PROBLEMS

A propylene random block copolymer (A) of the invention is a propylene block copolymer that has a melt flow rate of from 0.1 to 100 g/10 min and a melting point in the range of from 100 to 155°C and comprises 90 to 60% by weight of a portion insoluble in n-decane at room temperature ($D_{insol}$) and 10 to 40% by weight of a portion soluble in n-decane at room temperature ($D_{sol}$), wherein the $D_{insol}$ satisfies requirements (1) through (3) and the $D_{sol}$ satisfies requirements (4) through (6).

(1) The molecular weight distribution (Mw/Mn) obtained by GPC of the $D_{insol}$ is from 1.0 to 3.5,
(2) the content of skeletons derived from ethylene in the $D_{insol}$ is from 0.5 to 13% by mole,
(3) the total amount of 2,1- and 1,3-propylene units of propylene in the $D_{insol}$ is 0.2% by mole or less,
(4) the molecular weight distribution (Mw/Mn) obtained by GPC of the $D_{sol}$ is from 1.0 to 3.5,
(5) the intrinsic viscosity [η] in decalin at 135°C of the $D_{sol}$ is from 1.5 to 4 dl/g and
(6) the content of skeletons derived from ethylene in the $D_{sol}$ is from 15 to 25% by mole.

Furthermore, a propylene resin composition of the invention comprises the propylene random block copolymer (A).
The propylene block copolymer is desirably formed by polymerization by use of a metallocene catalyst system.
Furthermore, in the invention, sheets, films, injection molded articles, hollow molded articles, injection blow molded articles, molded articles such as food containers and medical instruments, and fibers are comprised of the propylene random block copolymer (A) or the propylene resin composition.

## EFFECT OF THE INVENTION

The propylene random block copolymer (A) of the invention and the resin composition containing the copolymer provide films or sheets excellent not only in low temperature heat sealability, low temperature impact resistance and thermal shrinkability but also in filming properties, and the films or sheets are suitably used as sealant films, shrink films, shrink labels and the like. Furthermore, they provide injection molded articles, injection blow molded articles and hollow molded articles excellent in heat resistance, transparency and impact resistance, and these articles are suitably used as food containers, medical containers or the like.

## BRIEF DESCRIPTION OF THE DRAWING

Fig. 1 is a graph showing examples of heat seal temperature and heat seal strength of a film formed by use of (A-2) that is an example of a propylene random block copolymer of the invention. Furthermore, Fig. 1 shows relationships between the heat seal temperature and the heat seal strength of a film formed by use of a propylene random copolymer (R-1) and a film formed by use of a propylene-ethylene random copolymer (R-2) as well.

## BEST MODE FOR CARRYING OUT THE INVENTION

The propylene random block copolymer (A) of the invention, the propylene resin composition containing the copolymer and various kinds of molded articles made thereof will be illustrated in detail.

### <Propylene Random Block Copolymer (A)>

The propylene random block copolymer (A) of the invention is produced, preferably in the presence of a metallocene catalyst system, by copolymerizing propylene and ethylene to produce a propylene/ethylene random copolymer that is a propylene block copolymer in a first polymerizing step, followed by producing a propylene-ethylene random copolymer rubber in a second polymerizing step. The propylene random block copolymer (A) has a melt flow rate of from 0.1 to 100 g/10 min and a melting point in the range of from 100 to 155°C. The propylene random block copolymer (A) is composed of 90 to 60% by weight of a portion insoluble in n-decane at room temperature ($D_{insol}$), which is mainly comprised of the propylene-ethylene random copolymer produced in the first step, and 10 to 40% by weight of a portion soluble in n-decane at room temperature ($D_{sol}$), which is mainly comprised of the propylene-ethylene random copolymer rubber produced in the second step. Herein, in the propylene random block copolymer (A), the melt flow rate, melting point, weight fraction of the portion insoluble in n-decane at room temperature ($D_{insol}$) and weight fraction of the portion

soluble in n-decane at room temperature ($D_{sol}$) may be appropriately varied depending on various kinds of applications of molded articles.

Herein, the propylene block copolymer is desirably obtained by polymerization in the presence of a metallocene catalyst system.

In the propylene random block copolymer (A) of the invention, the $D_{insol}$ satisfies requirements (1) through (3) and the $D_{sol}$ satisfies requirements (4) through (6).

(1) The molecular weight distribution (Mw/Mn) obtained by GPC of the $D_{insol}$ is from 1.0 to 3.5.
(2) the content of skeletons derived from ethylene in the $D_{insol}$ is from 0.5 to 13% by mole.
(3) the total amount of 2,1- and 1,3-propylene units in the $D_{insol}$ is 0.2% by mole or less.
(4) the molecular weight distribution (Mw/Mn) obtained by GPC of the $D_{sol}$ is from 1.0 to 3.5.
(5) the intrinsic viscosity [n] in decalin at 135°C of the $D_{sol}$ is from 1.5 to 4 dl/g.
(6) the content of skeletons derived from ethylene in the $D_{sol}$ is from 15 to 25% by mole.

In what follows, the requirements (1) through (6) that the propylene random block copolymer (A) according to the invention satisfies will be illustrated in detail.

**Requirement (1)**

The molecular weight distribution (Mw/Mn) obtained by GPC of the portion insoluble in n-decane at room temperature ($Di_{nsol}$) of the propylene random block copolymer (A) of the invention is from 1.0 to 3.5, preferably from 1.5 to 3.2 and more preferably 2.0 to 3.0. The reason why the portion insoluble in n-decane at room temperature ($Di_{nsol}$) of the propylene random block copolymer (A) of the invention has such narrow molecular weight distribution (Mw/Mn) obtained by GPC is because a metallocene catalyst system is used as a catalyst. When the Mw/Mn is larger than 3.5, low molecular weight components are increased; accordingly, bleed out of a film is caused to result in deteriorating transparency after heating. Furthermore, when Mw/Mn is larger than 3.5, transparency after heat sterilization is deteriorated in injection molded articles, injection blow molded articles, hollow molded articles and the like.

**Requirement (2)**

The content of skeletons derived from ethylene in the portion insoluble in n-decane at room temperature ($D_{insol}$) of the propylene random block copolymer (A) of the invention is from 0.5 to 13% by mole, preferably from 0.7 to 10% by mole and more preferably from 1.0 to 8% by mole. When the content of skeletons derived from ethylene in the $D_{insol}$ is less than 0.5% by mole, the melting point (Tm) of the propylene random block copolymer (A) is high and transparency of various kinds of molded articles and low temperature heat sealability are deteriorated. On the other hand, when the content of skeletons derived from ethylene in the $D_{insol}$ is more than 13% by mole, the melting point of the propylene random block copolymer (A) is low, thereby resulting in inconveniences such as deterioration of film forming properties and deterioration of rigidity under high temperatures of various kinds of molded articles.

**Requirement (3)**

The total amount of 2,1- and 1,3-propylene units in the portion insoluble in n-decane at room temperature ($D_{insol}$) of the propylene random block copolymer (A) of the invention is 0.2% by mole or less and preferably 0.1% by mole or less. When the total amount of 2,1- and 1,3-propylene units in the $D_{insol}$ is more than 0.2% by mole, the random copolymerizability of propylene and ethylene is deteriorated, thereby resulting in a broad composition distribution of the propylene-ethylene copolymer rubber in the portion ($D_{sol}$) soluble in n-decane at room temperature; accordingly, inconveniences such as deterioration in impact resistance of various kinds of molded articles and in transparency after heating are caused.

**Requirement (4)**

The molecular weight distribution (Mw/Mn) obtained by GPC of the portion soluble in n-decane at room temperature ($D_{sol}$) of the propylene random block copolymer (A) of the invention is from 1.0 to 3.5, preferably from 1.2 to 3.0 and more preferably from 1.5 to 2.5. The reason why the portion soluble in n-decane at room temperature ($D_{sol}$) of the propylene random block copolymer (A) of the invention has such narrow molecular weight distribution (Mw/Mn) obtained by GPC is because a metallocene catalyst system is used as a catalyst. When the Mw/Mn is larger than 3.5, low molecular weight propylene-ethylene random copolymer rubber increases in the $D_{sol}$, thereby resulting in inconveniences such as deterioration of impact resistance of various kinds of molded articles, deterioration of transparency after

heating, and blocking during storage of the molded articles.

**Requirement (5)**

The intrinsic viscosity [n] in decalin at 135°C of the portion soluble in n-decane at room temperature ($D_{sol}$) of the propylene random block copolymer (A) of the invention is from 1.5 to 4 dl/g, preferably from more than 1.5 dl/g to 3.5 dl/g or less, more preferably from 1.8 to 3.5 dl/g and most preferably from 2.0 to 3.0 dl/g. When a catalyst other than the metallocene catalyst system suitably used in the invention is used in the production of the random block copolymer, it is very difficult to produce a propylene random block copolymer (A) having an intrinsic viscosity [n] exceeding 1.5 dl/g, and in particular, it is almost impossible to produce a propylene random block copolymer (A) having an intrinsic viscosity [η] equal to or more than 1.8 dl/g. In the case the intrinsic viscosity [η] in decalin at 135°C of the intrinsic soluble portion $D_{sol}$ is higher than 4 dl/g, a propylene-ethylene random copolymer rubber having an ultrahigh molecular weight or a high ethylene amount is produced slightly as a by-product when the propylene-ethylene random copolymer rubber is produced in the second polymerization step. The propylene-ethylene random copolymer rubber produced slightly as a by-product is present non-uniformly in the propylene random block copolymer (A), thereby resulting in deterioration of impact resistance of various kinds of molded articles and appearance inconveniences such as generation of fish eyes in films and sheets.

**Requirement (6)**

The content of skeletons derived from ethylene in the portion soluble in n-decane at room temperature ($D_{sol}$) of the propylene random block copolymer (A) of the invention is from 15 to 25% by mole, preferably 18 to 25% by mole and more preferably from 20 to 25% by mole. When the content of skeletons derived from ethylene in the $D_{sol}$ is less than 15% by mole, impact resistance of the propylene random block copolymer is deteriorated. On the other hand, when the content of skeletons derived from ethylene in the $D_{sol}$ is more than 25% by mole, transparency of films and sheets is deteriorated.

In the case the propylene random block copolymer (A) of the invention is used to produce injection molded articles such as food containers and medical instruments, the content of skeletons derived from ethylene in the portion soluble in n-decane at room temperature ($D_{sol}$) may be controlled to usually from 17 to 25% by mole and preferably from 20 to 25% by mole, whereby transparency and impact resistance of the injection molded articles will not be lowered.

The propylene random block copolymer (A) of the invention is a propylene random block copolymer obtained by, preferably in the presence of a metallocene catalyst, producing a propylene random copolymer of propylene and a small amount of ethylene in the first polymerization step ([step 1]), followed by copolymerizing propylene and more ethylene than in the first step in the second polymerization step ([step 2]) to produce a propylene-ethylene copolymer rubber.

Metallocene catalysts suitably used in the invention include a metallocene catalyst composed of a metallocene compound, at least one kind of compounds selected from an organometallic compound, an organoaluminum oxy compound and a compound that reacts with the metallocene compound to form an ion pair, and, if necessary, a powdery carrier. A preferred example is a metallocene catalyst that is capable of stereoregular polymerization to form an isotactic or syndiotactic structure. Among the metallocene compounds, bridged metallocene compounds shown as examples in the applicants' international application (WO01/27124) and shown below are preferably used.

[Chem. 1]

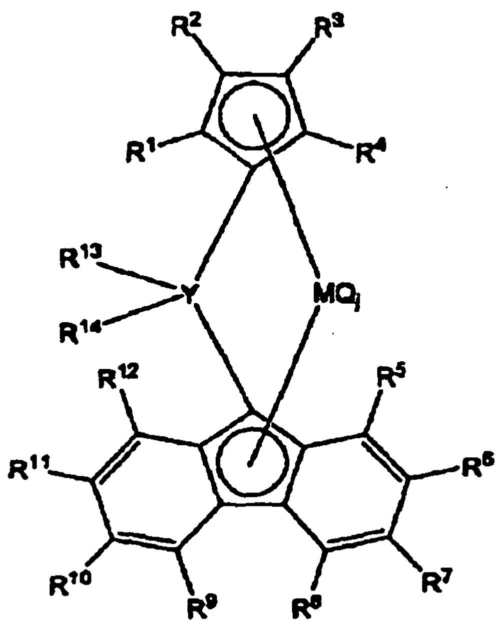

• • [I]

In the formula [I], $R^1$, $R^2$, $R^3$, $R^4$, $R^5$, $R^6$, $R^7$, $R^8$, $R^9$, $R^{10}$, $R^{11}$, $R^{12}$, $R^{13}$ and $R^{14}$ are selected from a hydrogen atom, hydrocarbon groups and Si-containing groups and may be the same as or different from each other. Examples of the hydrocarbon groups include linear chain hydrocarbon groups such as a methyl group, an ethyl group, a n-propyl group, an allyl group, a n-butyl group, a n-pentyl group, a n-hexyl group, a n-heptyl group, a n-octyl group, a n-nonyl group and a n-decanyl group; branched chain hydrocarbon groups such as an isopropyl group, a tert-butyl group, an amyl group, a 3-methylpentyl group, a 1,1-diethylpropyl group, a 1,1-dimethylbutyl group, a 1-methyl-1-propylbutyl group, a 1,1-propylbutyl group, a 1,1-dimethyl-2-methylpropyl group and a 1-methyl-1-isopropyl-2-methylpropyl group; cyclic saturated hydrocarbons such as a cyclopentyl group, a cyclohexyl group, a cycloheptyl group, a cyclooctyl group, a norbornyl group and an adamantyl group; cyclic unsaturated hydrocarbon groups such as a phenyl group, a tolyl group, a naphthyl group, a biphenyl group, a phenanthryl group and an anthracenyl group; saturated hydrocarbon groups substituted with cyclic unsaturated hydrocarbon groups, such as a benzyl group, a cumyl group, a 1,1-diphenylethyl group and a triphenylmethyl group; and hetero-atom-containing hydrocarbon groups such as a methoxy group, an ethoxy group, a phenoxy group, a furyl group, a N-methylamino group, a N,N-dimethylamino group, a N-phenylamino group, a pyrryl group and a thienyl group. Examples of the Si-containing groups include a trimethylsilyl group, a triethylsilyl group, a dimethylphenylsilyl group, a diphenylmethylsilyl group and a triphenylsilyl group.

Furthermore, in the formula [I], each of the substituent groups $R^5$ through $R^{12}$ may mutually combine with an adjacent substituent group to form a ring. Examples of the substituted fluorenyl groups include a benzofluorenyl group, a dibenzofluorenyl group, an octahydrodibenzofluorenyl group, an octamethyloctahydrodibenzofluorenyl group and an octamethyltetrahydrodicyclopentafluorenyl group.

In the formula [I], each of $R^1$, $R^2$, $R^3$ and $R^4$ that is substituted in the cyclopentadienyl group is preferably a hydrogen atom or a hydrocarbon group having 1 to 20 carbon atoms. The hydrocarbon groups having 1 to 20 carbon atoms include the above-mentioned hydrocarbon groups. More preferably, $R^3$ is a hydrocarbon group having 1 to 20 carbon atoms.

In the formula [I], each of $R^5$ through $R^{12}$ that substitute in the fluorene ring is preferably a hydrocarbon group having 1 to 20 carbon atoms. The hydrocarbon groups having 1 to 20 carbon atoms include the above-mentioned hydrocarbon groups. Each of the substituent groups $R^5$ through $R^{12}$ may mutually combine with an adjacent substituent group to form a ring.

In the formula [I], Y that bridges the cyclopentadienyl ring and the fluorenyl ring is preferably an element belonging to Group 14 in the periodic table, more preferably carbon, silicon or germanium, and still more preferably a carbon atom. Each of $R^{13}$ and $R^{14}$, which substitutes in the Y, is preferably a hydrocarbon group having 1 to 20 carbon atoms. These may be the same as or different from each other and may mutually combine to form a ring. Examples of the hydrocarbon groups having 1 to 20 carbon atoms include the above-mentioned hydrocarbon groups. Still more preferably, $R^{14}$ is an aryl group having 6 to 20 carbon atoms. Examples of the aryl groups include the cyclic unsaturated

hydrocarbon groups, the saturated hydrocarbon groups substituted with cyclic unsaturated hydrocarbon groups and the hetero-atom-containing cyclic unsaturated hydrocarbon groups. Furthermore, the $R^{13}$ and $R^{14}$ may be the same as or different from each other and may mutually combine to form a ring. Preferable examples of the substituent groups include a fluorenylidene group, a 10-hydroanthracenylidene group and a dibenzocycloheptadienylidene group.

Furthermore, in a metallocene compound represented by the formula [I], a substituent group selected from $R^1$, $R^4$, $R^5$ and $R^{12}$ may combine with $R^{13}$ or $R^{14}$ at the bridging portion to form a ring.

In the formula [I], M is preferably a transition metal belonging to Group 4 of the periodic table and more preferably Ti, Zr or Hf. Furthermore, Q is selected from halogen atoms, hydrocarbon groups, anionic ligands and neutral ligands capable of coordinating with a lone electron pair, and may be the same or different from each other. Herein, j is an integer of 1 to 4, and when j is 2 or more, Q may be the same as or different from each other. Specific examples of the halogen atoms include a fluorine atom, a chlorine atom, a bromine atom and an iodine atom, and specific examples of the hydrocarbon groups include the hydrocarbon groups described above. Specific examples of the anionic ligands include alkoxy groups such as methoxy, tert-butoxy and phenoxy; carboxylate groups such as acetate and benzoate; and sulfonate groups such as mesylate and tosylate. Specific examples of the neutral ligands capable of coordinating with a lone electron pair include organic phosphorous compounds such as trimethylphosphine, triethylphosphine, triphenylphosphine and diphenylmethylphosphine; and ethers such as tetrahydrofuran, diethyl ether, dioxane and 1,2-dimethoxyethane. At least one of Qs is preferably a halogen atom or an alkyl group.

Examples of the bridged metallocene compounds include diphenylmethylene(3-tert-butyl-5-methylcyclopentadienyl)(fluorenyl)zirconium dichloride, diphenylmethylene(3-tert-butyl-5-methylcyclopentadienyl)(2,7-di-tert-butylfluorenyl)zirconium dichloride, diphenylmethylene(3-tert-butyl-5-methylcyclopentadienyl)(3,6-di-tert-butylfluorenyl)zirconium dichloride, (methyl)(phenyl)methylene(3-tert-butyl-5-methylcyclopentadienyl)(octamethyloctahydrobenzofluorenyl)zirconium dichloride, and [3-(1',1',4',4',7',7',10',10'-octamethyloctahydrodibenzo[b,h]fluorenyl)(1,1,3-trimethyl-5-tert-butyl-1,2,3,3a-tetrahydropentalene)]zirconium chloride (see formula [II]).

[Chem. 2]

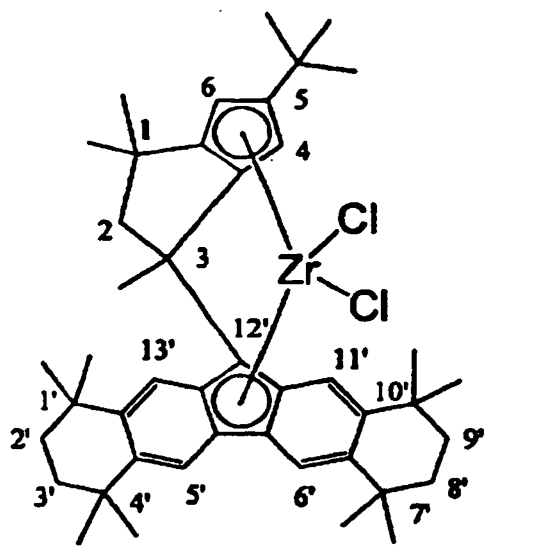

• • • [II]

In the metallocene catalyst used in the invention, as to the at least one kind of compounds selected from organometallic compounds, organoaluminum oxy compounds and compounds that react with the group 4 transition metal compound represented by the formula [I] to form an ion pair, and, if necessary, the particulate carrier, which are used together with the transition metal compound, compounds disclosed in the publication (WO01/27124) or Japanese Patent Application Laid-Open Publication No. H11-315109 by the present applicant are used without particular restrictions.

The propylene random block copolymer (A) in the invention is obtained by continuously carrying out the following two steps ([step 1] and [step 2]) by use of a polymerization equipment where two or more reactors are connected in series.

In the [step 1], under a polymerization temperature from 0 to 100°C and polymerization pressure from ordinary pressure to 5 MPa gauge pressure, propylene and ethylene are copolymerized. In the [step 1], the feed amount of ethylene is set smaller than that of propylene so that a propylene random copolymer produced in the [step 1] may be a main component of the $D_{insol}$.

In the [step 2], under a polymerization temperature from 0 to 100°C and polymerization pressure from ordinary pressure to 5 MPa gauge pressure, propylene and ethylene are copolymerized. In the [step 2], the feed amount of ethylene to that of propylene is set larger than that in the [step 1] so that a propylene-ethylene copolymer rubber produced in the [step 2] may be a main component of the $D_{sol}$.

By these steps, the requirements (1) through (3) involving the $D_{insol}$ are satisfied by controlling the polymerization conditions in the [step 1] and the requirements (4) through (6) involving the $D_{sol}$ are satisfied by controlling the polymerization conditions in the [step 2].

Furthermore, whether the propylene random block copolymer (A) of the invention satisfies the physical properties is largely determined by a chemical structure of the metallocene catalyst used. Specifically, the molecular weight distribution (Mw/Mn) obtained by GPC of the $D_{insol}$ in the requirement (1), the total amount of 2,1- and 1,3-propylene units in the $D_{insol}$ in the requirement (3), the molecular weight distribution (Mw/Mn) obtained by GPC of the $D_{sol}$ of the requirement (4) and the melting point of the propylene random block copolymer (A) are controlled so as to satisfy the requirements of the invention by appropriately selecting the metallocene catalysts used in the [step 1] and [step 2]. The metallocene catalysts preferably used in the invention are as mentioned above.

Furthermore, the content of skeletons derived from ethylene in the $D_{insol}$ in the requirement (2) is controlled through the feed amount of ethylene in the [step 1]. The intrinsic viscosity [$\eta$] in decalin at 135°C of the $D_{sol}$ in the requirement (5) is controlled through the feed amount of a molecular weight adjusting agent such as hydrogen or the like in the [step 2]. The content of skeletons derived from ethylene in the $D_{sol}$ in the requirement (6) is controlled through the feed amount of ethylene in the [step 2]. Furthermore, by controlling the ratio of the polymers produced in the [step 1] and [step 2], the composition ratio of the $D_{insol}$ and the $D_{sol}$ and the melt flow rate of the propylene random block copolymer (A) are appropriately controlled.

The propylene random block copolymer (A) of the invention may be produced in such a manner that a propylene-ethylene random copolymer produced in the [step 1] and a propylene-ethylene random copolymer rubber produced in the [step 2] are separately produced in the presence of a metallocene compound-containing catalyst and after that these are mechanically blended.

<Elastomer (B)>

In the propylene random block copolymer (A) of the invention, an elastomer (B) may be added in order to impart properties such as impact resistance, heat sealability, transparency, dimensional stability, and flexibility.

Examples of the elastomer (B) include ethylene/$\alpha$-olefin random copolymers (B-a), ethylene/$\alpha$-olefin/non-conjugated polyene random copolymers (B-b), hydrogenated block copolymers (B-c), propylene/$\alpha$-olefin copolymers (B-d), other elastic polymers and mixtures thereof.

The content of the elastomer (B) in the propylene resin composition containing the propylene random block copolymer (A) and the elastomer (B) is, though variable depending on characteristics imparted, usually from 1 to 50% by weight, preferably from 3 to 30% by weight and more preferably from 5 to 25% by weight.

The ethylene/$\alpha$-olefin random copolymer rubber (B-a) is a random copolymer rubber of ethylene and $\alpha$-olefin having 3 to 20 carbon atoms. In the ethylene/$\alpha$-olefin random copolymer rubber (B-a), the mole ratio of constituent units derived from ethylene and constituent units derived from $\alpha$-olefin (constituent units derived from ethylene/constituent units derived from $\alpha$-olefin) is usually from 95/5 to 15/85 and preferably from 80/20 to 25/75. Furthermore, the MFR measured under 230°C and load of 2.16 kg of the ethylene/$\alpha$-olefin random copolymer (B-a) is usually 0.1 g/10 min or more and preferably in the range of 0.5 to 30 g/10 min.

The ethylene/$\alpha$-olefin/non-conjugated polyene random copolymer (B-b) is a random copolymer rubber of ethylene, $\alpha$-olefin having 3 to 20 carbon atoms and non-conjugated polyene. Examples of the $\alpha$-olefins having 3 to 20 carbon atoms include those cited above. Examples of the non-conjugated polyene compounds include non-cyclic diene compounds such as 5-ethylidene-2-norbornene, 5-propylidene-5-norbornene, dicyclopentadiene, 5-vinyl-2-norbornene, 5-methylene-2-norbornene, 5-isopropylidene-2-norbornene and norbornadiene; chain non-conjugated diene compounds such as 1,4-hexadiene, 4-methyl-1,4-hexadiene, 5-methyl-1,4-hexadiene, 5-methyl-1,5-heptadiene, 6-methyl-1,5-heptadiene, 6-methyl-1,7-octadiene and 7-methyl-1,6-octadiene; and triene compounds such as 2,3-diisopropylidene-5-norbornene. Among these, 1,4-hexadiene, dicyclopentadiene and 5-ethylidene-2-norbornene are preferably used. In the ethylene/$\alpha$-olefin/non-conjugated polyene random copolymer (B-b), constituent units derived from ethylene are usually contained at from 94.9 to 0.1% by mole and preferably from 89.5 to 40% by mole, constituent units derived from the $\alpha$-olefin are usually contained at from 5 to 45% by mole and preferably from 10 to 40% by mole and constituent units derived from the non-conjugated polyene are usually contained at from 0.1 to 25% by mole and preferably from 0.5 to 20% by mole. In the invention, the total of constituent units derived from ethylene, constituent units derived from the $\alpha$-olefin and constituent units derived from the non-conjugated polyene compound is 100% by mole. The MFR measured under 230°C and load of 2.16 kg of the ethylene/$\alpha$-olefin/non-conjugated polyene random copolymer (B-b) is usually 0.05 g/10 min or more and preferably in the range of 0.1 to 30 g/10 min. Specific examples of the ethylene/$\alpha$-

olefin/non-conjugated polyene random copolymers (B-b) include an ethylene/propylene/diene terpolymer (EPDM).

The hydrogenated block copolymer (B-c) is a hydrogenation product of a block copolymer of which the block form is represented by formula (a) or (b) shown below and of which the hydrogenation rate is usually 90% by mole or more and preferably 95% by mole or more.

[Chem. 3]

$X(YX)_a$ (a)

$(XY)_a$ (b)

Examples of monovinyl substituted aromatic hydrocarbons that constitute a polymerization block represented by X in the formula (a) or formula (b) include styrene or styrene derivatives such as styrene, α-methylstyrene, p-methylstyrene, chlorostyrene, lower alkyl-substituted styrenes and vinyl naphthalene. These may be used solely or in combination of at least two kinds thereof. Examples of conjugated diene compounds that constitute a polymerization block represented by Y in the formula (a) or (b) include butadiene, isoprene and chloroprene. These may be used solely or in combination of at least two kinds thereof. Herein, n is an integer usually from 1 to 5 and preferably 1 or 2. Specific examples of the hydrogenated block copolymers (B-c) include styrene block copolymers such as a styrene/ethylene/butene/styrene block copolymer (SEBS), a styrene/ethylene/propylene/styrene block copolymer (SEPS) and a styrene/ethylene/propylene block copolymer (SEP). The block copolymer before hydrogenation may be produced, for example, by a method where a block copolymerization is carried out in the presence of a lithium catalyst or a Ziegler catalyst in an inert solvent. The production method thereof is described in detail, for instance, in Japanese Patent Application Publication (JP-B) No. S40-23798 and the like. The hydrogenation treatment may be carried out in the presence of a known hydrogenation catalyst in an inert solvent. Methods in detail are described, for instance, in JP-B Nos. S42-8704, S43-6636, S46-20814 and the like. When butadiene is used as the conjugated diene monomer, the content of 1,2-butadiene units in the polybutadiene block is usually from 20 to 80% by weight and preferably from 30 to 60% by weight. As the hydrogenated block copolymer (B-c), commercially available products may be used as well. Specific examples thereof include Clayton G1657 (registered trademark) (produced by Shell Chemicals Limited), Septon 2004 (registered trademark) (produced by Kuraray Co., Ltd.) and Tuftec H1052 (registered trademark) (produced by Asahi Kasei Corporation).

The propylene/α-olefin copolymer rubber (B-d) is a random copolymer rubber of propylene and α-olefin having 4 to 20 carbon atoms. In the propylene/α-olefin random copolymer rubber (B-d), the mole ratio of constituent units derived from propylene and constituent units derived from α-olefin (constituent units derived from propylene/constituent units derived from α-olefin) is usually from 95/5 to 5/95 and preferably from 80/15 to 20/80. Furthermore, in the propylene/α-olefin random copolymer rubber (B-d), two or more kinds of α-olefins may be used and one of these may be ethylene. The MFR measured under 230°C and load of 2.16 kg of the propylene/α-olefin random copolymer rubber (B-d) is usually 0.1 g/10 min or more and preferably in the range of 0.5 to 30 g/10 min.

The elastomers (B) may be used solely or in combination of two or more kinds thereof.

In the invention, the elastomer (B) is used in an amount usually in the range of 0 to 50 parts by weight and preferably in the range of 1 to 50 parts by weight based on 100 parts by weight of the propylene random block copolymer (A).

<Polyethylene Resin (C)>

In the propylene random block copolymer (A) of the invention, a polyethylene resin (C) may be used together with or in place of the elastomer (B) in order to impart functions such as impact resistance, heat sealability, transparency, dimensional stability and high-speed extrusion sheet formability.

When, for instance, impact resistance is imparted while inhibiting deterioration of transparency, a linear chain low density polyethylene having a density in the range of 0.900 to 0.930 $kg/m^3$, which is produced by copolymerizing ethylene and α-olefin having 4 or more carbon atoms in the presence of a metallocene catalyst, is preferably added.

As another example, when high-speed extrusion moldability is improved, high pressure polyethylene is desirably added. Herein, the high pressure polyethylene is a polyethylene having a long chain branch that is provided by radical polymerization of ethylene under pressure of 100 $kg/cm^2$ or more and in the presence of peroxide. A preferable melt flow rate (measured at 190°C under load of 2.16 kg in accordance with ASTM D 1238) of the high pressure polyethylene is usually in the range of 0.01 to 100 g/10 min and preferably in the range of 0.1 to 10 g/10 min. Furthermore, the density (ASTM D 1505) is usually in the range of 0.900 to 0.940 $g/cm^3$ and preferably in the range of 0.910 to 0.930 $g/cm^3$.

The content of the polyethylene resin (C) in the propylene resin composition containing the propylene random block copolymer (A) and the polyethylene resin (C) is, though variable depending on characteristics imparted, usually in the range of 0 to 50% by weight, preferably in the range of 1 to 50 % by weight, particularly preferably in the range of

3 to 30% by weight and still more preferably in the range of 5 to 25% by weight. The polyethylene resins (C) may be used solely or in combination of two or more kinds thereof. However, in the propylene resin composition of the invention, the amounts of the elastomer (B) and the polyethylene resin (C) are not zero part by weight simultaneously.

Furthermore, in the case of the propylene resin composition of the propylene random block copolymer (A), the elastomer (B) and the polyethylene resin (C), the amount of the propylene random block copolymer (A) is, though variable depending on characteristics imparted, usually in the range of 50 to 99% by weight, preferably in the range of 70 to 97% by weight and more preferably in the range of 75 to 95% by weight. Furthermore, the total amount of the elastomer (B) and polyethylene resin (C) is usually from 1 to 50% by weight, preferably from 3 to 30% by weight and more preferably from 5 to 25% by weight in the propylene resin composition. The ratio of the elastomer and polyethylene may be freely controlled depending on purposes.

<Nucleating Agent (D)>

To the propylene random block copolymer (A) or the polypropylene system of the invention, a nucleating agent (D) may be added if necessary in order to improve transparency, heat resistance and moldability.

Examples of the nucleating agents (D) used in the invention include sorbitol compounds such as dibenzylidene sorbitol, organic phosphoric acid ester compounds, rosin acid salt compounds, aliphatic dicarboxylic acids having 4 to 12 carbon atoms and metal salts thereof.

Among these, organic phosphoric acid ester compounds are preferred. The organic phosphoric acid ester compounds are compounds represented by formula [III] and/or formula [IV] shown below.

[Chem. 4]

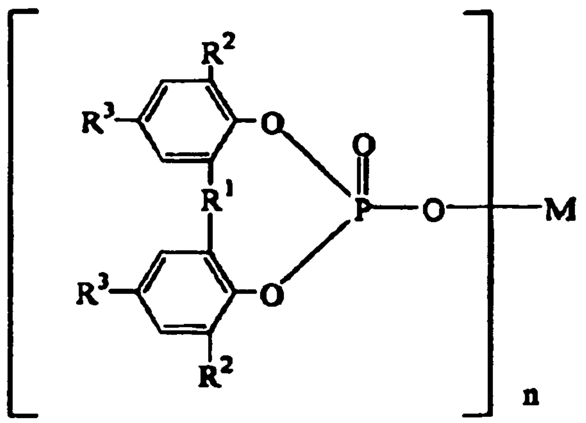

[III]

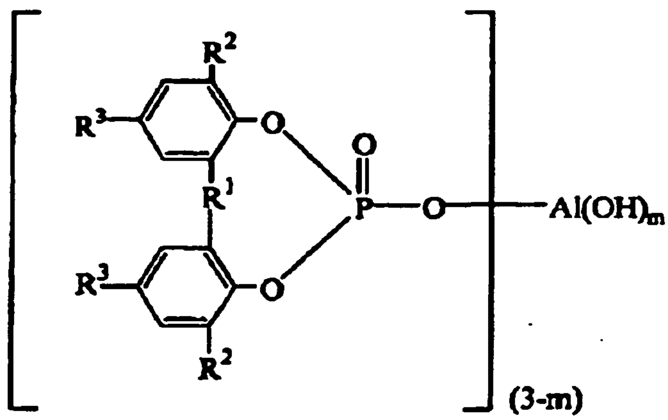

[IV]

In the formulas [III] and [IV], $R^1$ is a divalent hydrocarbon group having 1 to 10 carbon atoms, $R^2$ and $R^3$ are a hydrogen atom or a hydrocarbon group having 1 to 10 carbon atoms and may be the same or different from each other, M represents a monovalent to trivalent metal atom, n represents an integer from 1 to 3 and m represents 1 or 2.

Specific examples of the organic phosphoric acid ester compounds represented by the formula [III] include sodium-2,2'-methylene-bis(4,6-di-t-butylphenyl)phosphate, sodium-2,2'-ethylidene-bis(4,6-di-t-butylphenyl)phosphate, lithium-2,2'-methylene-bis(4,6-di-t-butylphenyl)phosphate, lithium-2,2'-ethylidene-bis(4,6-di-t-butylphenyl)phosphate, sodium-2,2'-ethylidene-bis(4-i-propyl-6-t-butylphenyl)phosphate, lithium-2,2'-methylene-bis(4-methyl-6-t-butylphenyl)phosphate, lithium-2,2'-methylene-bis(4-ethyl-6-t-butylphenyl)phosphate, sodium-2,2'-butylidene-bis(4,6-dimethylphenyl)phosphate, sodium-2,2'-butylidene-bis(4,6-di-t-butylphenyl)phosphate, sodium-2,2'-t-octylmethylene-bis(4,6-dimethylphenyl)phosphate, sodium-2,2'-t-octylmethylene-bis(4,6-di-t-butylphenyl)phosphate, calcium-bis-(2,2'-methylene-bis(4,6-di-t-butylphenyl)phosphate), magnesium-bis[2,2'-methylene-bis(4,6-di-t-butylphenyl)phosphate], barium-bis[2,2'-methylene-bis(4,6-di-t-butylphenyl)phosphate], sodium-2,2'-methylene-bis(4-methyl-6-t-butylphenyl) phosphate, sodium-2,2'-methylene-bis(4-ethyl-6-t-butylphenyl)phosphate, sodium-2,2'-ethylidene-bis(4-m-butyl-6-t-butylphenyl)phosphate, sodium-2,2'-methylene-bis(4,6-di-methylphenyl)phosphate, sodium-2,2'-methylene-bis(4,6-di-ethylphenyl)phosphate, potassium-2,2'-ethylidene-bis(4,6-di-t-butylphenyl)phosphate, calcium-bis[2,2'-ethylidene-bis(4,6-di-t-butylphenyl)phosphate], magnesium-bis[2,2'-ethylidene-bis(4,6-di-t-butylphenyl)phosphate], barium-bis[2,2'-ethylidene-bis(4,6-di-t-butylphenyl)phosphate], aluminum-tris[2,2'-methylene-bis(4,6-di-t-butylphenyl)phosphate], aluminum-tris[2,2'-ethylidene-bis(4,6-di-t-butylphenyl)phosphate] and mixtures of two or more kinds thereof.

Hydroxy aluminum phosphate compounds represented by the formula [IV] are also organic phosphoric acid ester compounds that may be used, and, in particular, a compound represented by formula [V] having tert-butyl groups in both of $R^2$ and $R^3$ is preferred.

[Chem. 5]

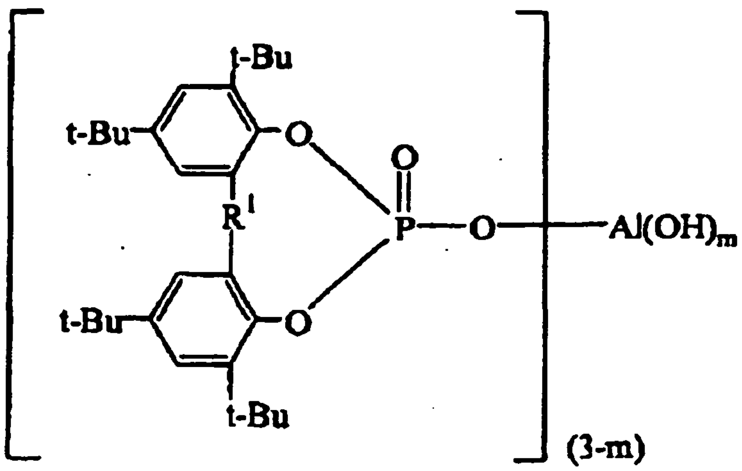

[V]

In the formula [V], $R^1$ represents a divalent hydrocarbon group having 1 to 10 carbon atoms and m is 1 or 2. A particularly preferable organic phosphoric acid ester compound is a compound represented by formula [VI].

[Chem. 6]

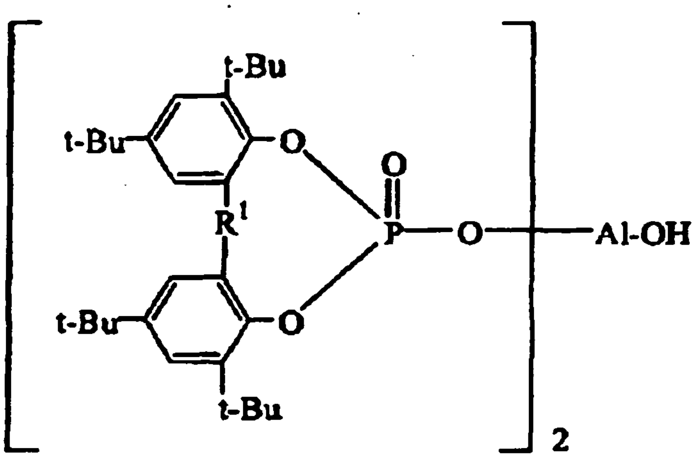

[VI]

In the formula [VI], $R^1$ represents a methylene group or an ethylidene group. Specifically, hydroxyaluminum-bis[2,2-methylene-bis(4,6-di-t-butyl)phosphate] or hydroxyaluminum-bis[2,2-ethylidene-bis(4,6-di-t-butyl)phosphate] is cited. Specific examples of the sorbitol compounds include 1,3,2,4-dibenzylidene sorbitol, 1,3-benzylidene-2,4-p-methylbenzylidene sorbitol, 1,3-benzylidene-2,4-p-ethylbenzylidene sorbitol, 1,3-p-methylbenzylidene-2,4-benzylidene sorbitol, 1,3-p-ethylbenzylidene-2,4-benzylidene sorbitol, 1,3-p-methylbenzylidene-2,4-p-ethylbenzylidene sorbitol, 1,3-p-ethylbenzylidene-2,4-p-methylbenzylidene sorbitol, 1,3,2,4-di(p-methylbenzylidene)sorbitol, 1,3,2,4-di(p-ethylbenzylidene)sorbitol, 1,3,2,4-di(p-n-propylbenzylidene)sorbitol, 1,3,2,4-di(p-i-propylbenzylidene)sorbitol, 1,3,2,4-di(p-n-butylbenzylidene)sorbitol, 1,3,2,4-di(p-s-butylbenzylidene)sorbitol, 1,3,2,4-di(p-t-butylbenzylidene)sorbitol, 1,3,2,4-di(p-methoxybenzylidene)sorbitol, 1,3,2,4-di(p-ethoxybenzylidene)sorbitol, 1,3-benzylidene-2,4-p-chlorobenzylidene sorbitol, 1,3-p-chlorobenzylidene-2,4-benzylidene sorbitol, 1,3-p-chlorobenzylidene-2,4-p-methylbenzylidene sorbitol, 1,3-p-chlorobenzylidene-2,4-p-ethylbenzylidene sorbitol, 1,3-p-methylbenzylidene-2,4-p-chlorobenzylidene sorbitol, 1,3-p-ethylbenzylidene-2,4-p-chlorobenzylidene sorbitol and 1,3,2,4-di(p-chlorobenzylidene)sorbitol. In particular, 1,3,2,4-dibenzylidene sorbitol, 1,3,2,4-di(p-methylbenzylidene)sorbitol or 1,3-p-chlorobenzylidene-2,4-p-methylbenzylidene sorbitol is preferred.

Specific examples of the aliphatic dicarboxylic acids having 4 to 12 carbon atoms and metal salts thereof, which may be used as the nucleating agent (D) in the invention, include succinic acid, glutaric acid, adipic acid, suberic acid and sebacic acid, and Li salts, Na salts, Mg salts, Ca salts, Ba salts and Al salts thereof. Furthermore, examples of aromatic carboxylic acids and metal salts thereof, which may be used as the nucleating agent (D) of the invention, include benzoic acid, allyl-substituted acetic acids and aromatic dicarboxylic acids, and Group 1 through 3 metal salts thereof, and specific examples thereof include benzoic acid, p-isopropylbenzoic acid, o-tertiary butyl benzoic acid, p-tertiary butyl benzoic acid, monophenylacetic acid, diphenylacetic acid, phenyldimethyl acetic acid and phthalic acid, and Li salts, Na salts, Mg salts, Ca salts, Ba salts and Al salts thereof.

The nucleating agent (D) used in the invention is added, to 100 parts by weight of the propylene random block copolymer (A) or the propylene resin composition containing the copolymer, in an amount of usually from 0.05 to 0.5 parts by weight and preferably from 0.1 to 0.3 parts by weight.

A propylene resin (P) may be added to the propylene random block copolymer (A) of the invention or the propylene resin composition containing the copolymer if necessary. The propylene resins (P) used herein include homopolymers of propylene, propylene/ethylene copolymers, propylene/$\alpha$-olefin copolymers, propylene/ethylene block copolymers, propylene/$\alpha$-olefin block copolymers, syndiotactic propylene polymers and atactic propylene polymers, other than the propylene random block copolymer (A). Herein, as the $\alpha$-olefin, $\alpha$-olefins having 4 through 20 carbon atoms may be used.

The propylene random block copolymer (A) of the invention or the propylene resin composition containing the copolymer may contain, if necessary, additives such as vitamins, anti-oxidants, heat-resistant stabilizers, weather-resistant stabilizers, slip agents, anti-blocking agents, petroleum resins and mineral oils while still achieving the objects of the invention.

After the aforementioned components and, if necessary, various kinds of additives are blended by use of a mixer such as a Henschel mixer, a Bunbury mixer and a tumbler mixer, and the blend is pelletized by use of a single screw or twin screw extruder. The resulting pellets are molded by use of various kinds of methods such as an extrusion molding method, an injection molding method, an injection stretch blow molding method and a hollow molding method, to give various kinds of molded articles. Typical examples of applications of the invention will be described below.

<Sealant Film>

In order to impart low temperature heat sealing properties to a conventional propylene-ethylene copolymer, a propylene-butene random copolymer rubber or butene-propylene random copolymer rubber has been added thereto. According to the propylene random block copolymer (A) of the invention, the addition amount of such rubber component is reduced; accordingly, a production cost of sealant film products is reduced. Furthermore, the propylene random block copolymer (A) of the invention has low temperature heat sealing properties close to those of polyethylene and simultaneously has rigidity higher than that of polyethylene; accordingly, the propylene random block copolymer (A) can give thinner low temperature sealant films.

The propylene random block copolymer (A) of the invention and the propylene resin composition containing the copolymer give sealant films excellent in filming properties, high in rigidity and having low temperature heat sealing properties. In the sealant film application, the melting point of the propylene random block copolymer (A) is from 100 to 155°C, preferably from 110 to 150°C and more preferably from 115 to 140°C. Furthermore, the amount of the portion soluble in n-decane at room temperature ($D_{sol}$) is from 10 to 40% by weight and preferably from 20 to 30% by weight.

<Retort Film>

From the propylene random block copolymer (A) of the invention and the propylene resin composition containing the copolymer, retort films high in transparency and excellent in impact resistance are prepared. Heat resistance during heating is necessary for the retort film; accordingly, among the propylene random block copolymers (A), propylene random block copolymers having a melting point from 140 to 155°C and preferably from 145 to 155°C are used. Furthermore, the amount of the portion soluble in n-decane at room temperature ($D_{sol}$) is from 10 to 40% by weight and preferably from 20 to 30% by weight. When the propylene random block copolymer (A) and the propylene resin composition containing the copolymer of the invention are used for high retort applications where a heating temperature is high, a polypropylene homopolymer having a melting point of 155°C or more is desirably added thereto.

<Shrink Film and Shrink Label>

From the propylene random block copolymer (A) of the invention and the propylene resin composition containing the copolymer, shrink films and shrink labels high in rigidity and excellent in thermal shrinkage are prepared. In the applications, the melting point of the propylene random block copolymer (A) is from 100 to 155°C, preferably from 115 to 140°C and more preferably from 120 to 135°C. Furthermore, the amount of the portion soluble in n-decane at room temperature ($D_{sol}$) is from 10 to 40% by weight and preferably from 15 to 30% by weight. Herein, in the case the films are substituted for heat shrinkable films made of other material such as polystyrene, a petroleum resin or a polypropylene homopolymer having a melting point of 155°C or more may be added in order to improve rigidity and heat shrinkage.

<Adhesive Film for Surface Protection>

The propylene random block copolymer (A) of the invention and the propylene resin composition containing the copolymer have appropriate stickiness and bleed a very small amount of components under high temperatures; accordingly, these may be used as a base material for a surface protective film or a self-adhesive surface protective adhesive film.

In a fundamental configuration of an adhesive film for surface protection, the propylene random block copolymer (A) of the invention or the propylene resin composition containing the copolymer is used as a base material and, if necessary, an adhesive layer is placed on one surface of the film. The adhesive film for surface protection that has the propylene random block copolymer (A) of the invention or the propylene resin composition containing the copolymer as a base material is suitably used as a surface protective adhesive film for electronic devices such as portable telephones, portable game machines and display panels and precision apparatus, because it has appropriate adherence necessary in re-peel applications and does not increase the adherence to damage the re-peelability even when it is left under a high temperature environment. In the surface protective adhesive film applications, mechanical properties have to be controlled depending on parts protected. The melting point of the propylene random block copolymer (A) is from 100 to 155°C, preferably from 115 to 155°C and more preferably from 120 to 155°C. Furthermore, the amount of the portion soluble in n-decane at room temperature ($D_{sol}$) is usually from 10 to 40% by weight and preferably from 15 to 30% by weight.

<Other Applications as Film and Sheet>

The propylene random block copolymer (A) of the invention and the propylene resin composition containing the copolymer may be used for various kinds of films and sheets such as medical containers, food packages and miscellaneous goods packages.

<Injection Molded Articles>

Because of being excellent in transparency, heat resistance, rigidity and low temperature impact resistance, the propylene random block copolymer (A) of the invention and the propylene resin composition containing the copolymer may be suitably used for injection molded articles such as medical containers such as prefilled syringes, food containers such as ice cream containers, and storage bins. In these applications, the melting point of the propylene random block copolymer (A) is from 100 to 155°C, preferably from 130 to 155°C and more preferably from 140 to 155°C. Furthermore, the amount of the portion soluble in n-decane at room temperature ($D_{sol}$) is usually from 10 to 40% by weight, preferably from 10 to 30% by weight and more preferably from 10 to 20% by weight. Particularly, in applications where heat sterilization is necessary such as medical containers, a polypropylene homopolymer having a melting point of 155°C or more may be added in order to further improve heat resistance.

<Injection Blow Molded Articles>

Because of being excellent in transparency, heat resistance and low temperature impact resistance, the propylene random block copolymer (A) of the invention and the propylene resin composition containing the copolymer may be suitably used for injection blow molded articles such as beverage containers and seasoning containers. In the applications, the melting point of the propylene random block copolymer (A) is from 100 to 155°C, preferably from 110 to 155°C and more preferably from 120 to 155°C. Furthermore, the amount of the portion soluble in n-decane at room temperature ($D_{sol}$) is usually from 10 to 40% by weight, preferably from 10 to 30% by weight and more preferably from 10 to 20% by weight. In the applications, a polypropylene homopolymer having a melting point of 155°C or more may be added in order to improve the rigidity, and a modifying agent to improve thickness uniformity may be added if necessary.

<Hollow Molded Articles>

Because of being excellent in glossiness, transparency and low temperature impact resistance, the propylene random block copolymer (A) of the invention and the propylene resin composition containing the copolymer may be suitably used for hollow molded articles such as house cleaner bottles and cosmetic bottles. In these applications, the melting point of the propylene random block copolymer (A) is from 100 to 155°C, preferably from 110 to 145°C and more preferably from 120 to 140°C. Furthermore, the amount of the portion soluble in n-decane at room temperature ($D_{sol}$) is from 10 to 40% by weight and preferably from 10 to 30% by weight. In the applications, a modifying agent such as a polypropylene polymer containing an ultrahigh molecular component may be added, if necessary, in order to improve drawdown resistance during hollow molding operation.

<Fibers>

Because of being excellent in flexibility and having low stickiness, the propylene random block copolymer (A) of the invention and the propylene resin composition containing the copolymer may be suitably used in non-woven fabrics for medical use, hygienic material use and industrial material use. In these applications, the melting point of the propylene random block copolymer (A) is from 100 to 155°C, preferably from 110 to 140°C and more preferably from 115 to 130°C. Furthermore, the amount of the portion soluble in n-decane at room temperature ($D_{sol}$) is from 10 to 40% by weight and preferably from 20 to 40% by weight.

[Examples]

In the next place, the invention will be illustrated in detail with reference to examples. However, the invention is not restricted thereto. Measurement methods of the physical properties in examples and comparative examples are shown below.

(m1) MFR (Melt Flow Rate)

The MFR was measured in accordance with ASTM D1238 (230°C, load 2.16 kg).

(m2) Melting Point (Tm)

The melting point was measured by use of a differential scanning calorimeter (DSC, produced by Perkin-Elmer Corporation). An endothermic peak in the third step measured here was defined as the melting point (Tm).

(Measurement Conditions)

First step: Heating up to 240°C at 10°C/min, and maintaining the temperature for 10 min.
Second step: Lowering to 60°C at 10°C/min.
Third step: Heating up to 240°C at 10°C/min.

(m3) Amount of Portion Soluble in n-decane at Room Temperature ($D_{sol}$)

To 5 g of a sample of a final product (that is, a propylene random block polymer of the invention), 200 ml of n-decane was added, and the mixture was heated at 145°C for 30 min to give a solution. The solution was cooled over

approximately 3 hr to 20°C and allowed to stand for 30 min. Thereafter, the precipitate (hereinafter, referred to as n-decane insoluble portion: $D_{insol}$) was filtered. The filtrate was added to acetone of an amount approximately 3 times that of the filtrate and thereby the components dissolved in n-decane were precipitated (precipitate (A)). The precipitate (A) and acetone were separated by filtering and the precipitate was dried. When the filtrate was concentrated to dryness, no residue was confirmed.

The n-decane-soluble amount was obtained according to the formula below.

n-decane-soluble amount (% by weight) = [weight of precipitate (A)/weight of sample] × 100.

(m4) Mw/Mn Measurement [weight average molecular weight (Mw), number average molecular weight (Mn)]

By using GPC-150C Plus (produced by Waters Corporation), a measurement was carried out as shown below. As columns for separation, TSKgel GMH6-HT and TSKgel GMH6-HTL were used, their column sizes were 7.5 mm in inner diameter and 600 mm in length, the column temperature was set at 140°C, o-dichlorobenzene (Wako Pure Chemical Industries, Ltd.) and 0.025% by weight of BHT (Wako Pure Chemical Industries, Ltd.) as an anti-oxidant were used in the mobile phase and flowed at 1.0 ml/min, the concentration of the sample was set at 0.1% by weight, the volume of the sample injected was set at 500 μL, and a differential refractometer was used as a detector. Standard polystyrenes having a molecular weight of $Mw<1000$ and $Mw>4 \times 10^6$ were products of Tosoh Corporation, and standard polystyrenes having a molecular weight of $1000 \leq Mw \leq 4 \times 10^6$ were products of Pressure Chemical Company.

(m5) Content of Skeletons Derived from Ethylene

In order to measure the concentration of skeletons derived from ethylene in each of the $D_{insol}$ and the $D_{sol}$, 20 to 30 mg of a sample was dissolved in 0.6 ml of mixed solution of 1,2,4-trichlorobenzene/deuterated benzene (2:1) and then subjected to carbon nuclear magnetic resonance analysis ($^{13}$C-NMR). The quantitative determinations of propylene, ethylene and α-olefin were performed based on dyad sequence distribution. For instance, in the case of a propylene-ethylene copolymer, the determination was performed using:

[Formula 1]

$$PP = S_{\alpha\alpha},\ EP = S_{\alpha\gamma} + S_{\alpha\beta},\ EE = 1/2(S_{\beta\delta} + S_{\delta\delta}) + 1/4S_{\gamma\delta}$$

and also using formulas (Eq-1) and (Eq-2) below:
[Formula 2]

$$\text{Propylene (\% by mole)} = (PP + 1/2EP) \times 100/[(PP + 1/2EP) + (1/2EP + EE)] \quad \text{--- (Eq-1)}$$

$$\text{Ethylene (\% by mole)} = (1/2EP + EE) \times 100/[(PP + 1/2EP) + (1/2EP + EE)] \quad \text{--- (Eq-2)}$$

(m6) Intrinsic viscosity [n]

The intrinsic viscosity was measured at 135°C in a decalin solvent. Approximately 20 mg of a sample was dissolved in 15 ml of decalin and the specific viscosity η sp was measured in an oil bath at 135°C. This decalin solution was diluted with additional 5 ml decalin solvent and then the specific viscosity η sp was measured in the same manner as above. This diluting procedure was further repeated twice, and the value of η sp/C when the concentration (C) was

extrapolated to 0 was determined as the intrinsic viscosity.

$$[\eta] = \lim(\eta\ sp/C)(C \rightarrow 0).$$

(m7) Measurement of Amounts of 2,1- and 1,3-Propylene Units

By use of $^{13}C$-NMR, according to a method described in Japanese Patent Application Laid-Open Publication No. H07-145212, the amounts of 2,1- and 1,3-propylene units were measured.

(m8) Half Crystallization Time ($T_{1/2}$)

A differential scanning colorimeter (DSC, produced by Seiko Instrument Co., Ltd.) was used.

(Measurement Conditions)

First step: Heating up to 220°C at 10°C/min, and maintaining the temperature for 3 min.
Second step: Lowering to 110°C at 60°C/min.

(m9) Heat Sealability of Film (Minimum Heat Sealing Temperature)

A film of 5 mm width was used as a sample and sealed for a sealing time of 1 second with pressure set at 0.2 MPa as follows. The film was heat-sealed at 70°C at a lower portion while changing the temperature of an upper portion of the seal bar. Both ends of the film were drawn at 300 mm/min to measure the maximum peel strength. A diagram was prepared where relationship of the temperature of the upper portion and the heat seal strength was plotted. From the plot diagram, a temperature where the heat seal strength was 1 N/15 mm was read and taken as the minimum heat seal temperature.

(m10) Young's Modulus of Film

In accordance with JIS K 6781, the Young's modulus of a stretched film was measured. The tensile speed was set at 200 mm/min and the distance between chucks was set at 80 mm.

(m11) Impact Test of Film

A film was sampled in 5 cm x 5 cm and the surface impact strength was measured under a predetermined temperature by use of an impact tester (in a system where a hammer was pushed upward) (hammer conditions: tip end 1 inch, 3.0J).

(m12) Haze of Film (HAZE)

The haze of a film was measured in accordance with ASTM D-1003.
Furthermore, a film heated at 80°C for 4 days was also similarly measured for the haze.

(m13) Blocking Properties of Film

Chill roll surfaces of films 10 cm in MD direction and 10 cm in TD direction were superposed and the films were kept in a thermostat set at 50°C for 3 days under a load of 200 $g/cm^2$. Thereafter, the superposed films were conditioned for 24 hr or more in a chamber set at 23°C and 50% humidity, and were measured for peel strength when peeled at a tensile speed of 200 mm/min, and a value obtained by dividing the peel strength by a specimen width was taken as a blocking factor. Herein, the larger the blocking factor is, the larger the adherence is.

(m14) Izod Impact Strength of Injection Molded Article

The Izod impact strength (IZ) was measured in accordance with ASTM D256 under the conditions shown below.

<Test Conditions>

Temperature: 23°C
Test specimen: 12.7 mm (width) x 6.4 mm (thickness) x 64 mm (length)

A notch was formed by machining.

(m15) High-speed Surface Impact Strength of Injection Molded Article (HRIT)

In the high-speed surface impact strength measurement, total fracture energy was measured under the conditions shown below.

<Test Conditions>

Temperature: 0°C
Test specimen: 120 mm (width) x 130 mm (length) x 2.0 mm (thickness)(rectangular plate)
Speed: 3 m/s
Impact core: 1/2 inch ϕ
Table: 3 inch

(m16) Heat Deformation Temperature of Injection Molded Article

The heat deformation temperature was measured in accordance with ASTM D648.

<Test Conditions>

Test specimen: 12.7 mm (width) × 127 mm (length) × 6.4 mm (thickness)
Load: 0.45 MPa
Thickness of Test Specimen: 1/4 inch

(m17) HAZE of Injection Molded Article

The HAZE was measured in accordance with ASTM D1003.

<Test Conditions>

Test specimen: 120 mm (width) × 130 mm (length) × 2.0 mm thickness (rectangular plate)

[Production Example 1]

(1) Production of Solid Catalyst Carrier

In a 1L branched flask, 300 g of $SiO_2$ was sampled and 800 ml of toluene was added to prepare a slurry.
In the next place, the slurry was transferred into a 5L 4-neck flask, and 260 ml of toluene was added.
2830 ml of a methylaluminoxane (hereinafter referred to as MAO)-toluene solution (10% by weight solution, produced by Albemar Co., Ltd.) was added thereto, and the mixture was agitated at room temperature for 30 min, heated to 110°C over 1 hr and allowed to react for 4 hr. After completion of the reaction, the mixture was cooled to room temperature. After the cooling, supernatant toluene was removed and fresh toluene was substituted for it until the degree of substitution was 95%.

(2) Production of Solid Catalyst Component (supporting a metal catalyst component on the carrier)

In a glove box, 2.0 g of diphenylmethylene(3-t-butyl-5-methylcyclopentadienyl)(2,7-di-t-butylfluorenyl)zirconium dichloride (M1) synthesized according to a description of WO2004/08775 was sampled in a 5 L four neck flask. The flask was taken out of the glove box, 0.46 L of toluene and 1.4 L of the MAO/$SiO_2$/toluene slurry prepared in the (1) were added thereto under a nitrogen atmosphere, and the resulting mixture was agitated for 30 min, resulting in a supported catalyst.

The resulting diphenylmethylene(3-t-butyl-5-methylcyclopentadienyl)(2,7-di-t-butylfluorenyl)zirconium dichloride/MAO/$SiO_2$/toluene slurry was subjected to substitution by n-heptane to 99%, and the final slurry amount was adjusted to 4.5 L. The operation was carried out at room temperature.

(3) Production of Prepolymerized Catalyst

202 g of the solid catalyst component prepared in the (2), 109 ml of triethyl aluminum and 100 L of heptane were introduced in a 200 L autoclave equipped with an agitator. While the inside temperature was kept at a temperature of from 15 to 20°C, 2020 g of ethylene was introduced, and the mixture was allowed to react for 180 min under agitation.

After completion of the polymerization, the solid component was allowed to settle, and removal of the supernatant liquid and washing with heptane were repeated twice. The resulting prepolymerized catalyst was suspended again in purified heptane, and the solid catalyst component concentration was adjusted to 2 g/L with heptane. The prepolymerized catalyst contained 10 g of polyethylene per 1 g of the solid catalyst component.

(4) Polymerization

In a 58 L tubular polymerization equipment, propylene was continuously fed at 40 kg/hr; hydrogen at 5 N L/hr; the catalyst slurry prepared in the (3) at 3.6 g/hr in terms of the solid catalyst component; and triethyl aluminum at 2.2 g/hr, and the mixture was subjected to polymerization in a full liquid state where no gaseous phase existed in the tubular polymerization equipment. The temperature in the tubular reactor was set at 30°C and pressure was set at 3.2 MPa/G. The catalyst in the reaction is referred to as M1 catalyst.

The resulting slurry was delivered to a 1000 L vessel polymerization equipment equipped with an agitator, and further subjected to polymerization. To the polymerization equipment, propylene was fed at 45 kg/hr, ethylene was fed so that the ethylene concentration in the gaseous phase portion would be 1.5% by mole and hydrogen was fed so that the hydrogen concentration in the gaseous phase portion would be 0.2% by mole. A polymerization reaction was carried out at 72°C under pressure of 3.1 MPa/G.

The resulting slurry was delivered to a 500 L vessel polymerization equipment equipped with an agitator, and further subjected to polymerization. To the polymerization equipment, propylene was fed at 10 kg/hr, ethylene was fed so that the ethylene concentration in the gaseous phase portion would be 1.5% by mole and hydrogen was fed so that the hydrogen concentration in the gaseous phase portion would be 0.2% by mole. A polymerization reaction was carried out at 71°C under pressure of 3.0 MPa/G.

The resulting slurry was delivered to a 500 L vessel polymerization equipment equipped with an agitator, and further subjected to polymerization. To the polymerization equipment, propylene was fed at 10 kg/hr, ethylene was fed so that the ethylene concentration in the gaseous phase portion would be 1.5% by mole and hydrogen was fed so that the hydrogen concentration in the gaseous phase portion would be 0.2% by mole. A polymerization reaction was carried out at 70°C under pressure of 3.0 MPa/G.

The resulting slurry was delivered to a 500 L vessel polymerization equipment equipped with an agitator, and subjected to copolymerization. To the polymerization equipment, propylene was fed at 10 kg/hr and hydrogen was fed so that the hydrogen concentration in the gaseous phase portion would be 0.11% by mole. Polymerization was carried out at 61°C while maintaining the pressure at 2.9 MPa/G by supplying ethylene.

The resulting slurry was, after vaporization, subjected to a gas-solid separation to give a propylene random block copolymer (A-1). The resulting propylene random block copolymer (A-1) was vacuum dried at 80°C. The characteristics of the resulting propylene random block copolymer (A-1) are shown in Table 1.

[Production Example 2]

Except that a polymerization method was changed as shown below, a method similar to that of Production Example 1 was carried out.

(1) Polymerization

In a 58 L tubular polymerization equipment, propylene was continuously fed at 40 kg/hr; hydrogen at 5 N L/hr; the catalyst slurry prepared in the (3) of Production Example 1 at 3.6 g/hr in terms of the solid catalyst component; and triethyl aluminum at 2.2 g/hr, and the mixture was subjected to polymerization in a full liquid state where no gaseous phase existed in the tubular polymerization equipment. The temperature in the tubular reactor was set at 30°C and pressure was set at 3.2 MPa/G. The catalyst in the reaction is referred to as M1 catalyst.

The resulting slurry was delivered to a 1000 L vessel polymerization equipment equipped with an agitator, and further subjected to polymerization. To the polymerization equipment, propylene was fed at 45 kg/hr, ethylene was fed so that the ethylene concentration in the gaseous phase portion would be 1.5% by mole and hydrogen was fed so that the hydrogen concentration in the gaseous phase portion would be 0.2% by mole. A polymerization reaction was carried out at 72°C under pressure of 3.1 MPa/G.

The resulting slurry was delivered to a 500 L vessel polymerization equipment equipped with an agitator, and further subjected to polymerization. To the polymerization equipment, propylene was fed at 10 kg/hr, ethylene was fed so that the ethylene concentration in the gaseous phase portion would be 1.5% by mole and hydrogen was fed so that the hydrogen concentration in the gaseous phase portion would be 0.2% by mole. A polymerization reaction was carried out at 71°C under pressure of 3.0 MPa/G.

The resulting slurry was delivered to a 500 L vessel polymerization equipment equipped with an agitator, and further subjected to polymerization. To the polymerization equipment, propylene was fed at 10 kg/hr, ethylene was fed so that the ethylene concentration in the gaseous phase portion would be 1.5% by mole and hydrogen was fed so that the hydrogen concentration in the gaseous phase portion would be 0.2% by mole. A polymerization reaction was carried out at 70°C under pressure of 3.0 MPa/G.

The resulting slurry was delivered to a 500 L vessel polymerization equipment equipped with an agitator, and subjected to copolymerization. To the polymerization equipment, propylene was fed at 10 kg/hr and hydrogen was fed so that the hydrogen concentration in the gaseous phase portion would be 0.1% by mole. Polymerization was carried out at 54°C while maintaining the pressure at 2.9 MPa/G by supplying ethylene.

The resulting slurry was, after vaporization, subjected to a gas-solid separation to give a propylene random block copolymer (A-2). The resulting propylene random block copolymer (A-2) was vacuum dried at 80°C. The characteristics of the resulting propylene random block copolymer (A-2) are shown in Table 1.

[Production Example 3]

Except that a polymerization method was changed as shown below, a method similar to that of Production Example 1 was carried out.

(1) Polymerization

In a 58 L tubular polymerization equipment, propylene was continuously fed at 40 kg/hr; hydrogen at 5 N L/hr; the catalyst slurry prepared in the (3) of Production Example 1 at 3.6 g/hr in terms of the solid catalyst component; and triethyl aluminum at 2.2 g/hr, and the mixture was subjected to polymerization in a full liquid state where no gaseous phase existed in the tubular polymerization equipment. The temperature in the tubular reactor was set at 30°C and pressure was set at 3.2 MPa/G. The catalyst in the reaction is referred to as M1 catalyst.

The resulting slurry was delivered to a 1000 L vessel polymerization equipment equipped with an agitator, and further subjected to polymerization. To the polymerization equipment, propylene was fed at 45 kg/hr, ethylene was fed so that the ethylene concentration in the gaseous phase portion would be 1.5% by mole and hydrogen was fed so that the hydrogen concentration in the gaseous phase portion would be 0.2% by mole. A polymerization reaction was carried out at 72°C under pressure of 3.1 MPa/G.

The resulting slurry was delivered to a 500 L vessel polymerization equipment equipped with an agitator, and further subjected to polymerization. To the polymerization equipment, propylene was fed at 10 kg/hr, ethylene was fed so that the ethylene concentration in the gaseous phase portion would be 1.5% by mole and hydrogen was fed so that the hydrogen concentration in the gaseous phase portion would be 0.2% by mole. A polymerization reaction was carried out at 71°C under pressure of 3.0 MPa/G.

The resulting slurry was delivered to a 500 L vessel polymerization equipment equipped with an agitator, and further subjected to polymerization. To the polymerization equipment, propylene was fed at 10 kg/hr, ethylene was fed so that the ethylene concentration in the gaseous phase portion would be 1.5% by mole and hydrogen was fed so that the hydrogen concentration in the gaseous phase portion would be 0.2% by mole. A polymerization reaction was carried out at 70°C under pressure of 3.0 MPa/G.

The resulting slurry was delivered to a 500 L vessel polymerization equipment equipped with an agitator, and

subjected to copolymerization. To the polymerization equipment, propylene was fed at 10 kg/hr and hydrogen was fed so that the hydrogen concentration in the gaseous phase portion would be 0.1% by mole. Polymerization was carried out at 51°C while maintaining the pressure at 2.9 MPa/G by supplying ethylene.

The resulting slurry was, after vaporization, subjected to a gas-solid separation to give a propylene random block copolymer (A-3). The resulting propylene random block copolymer (A-3) was vacuum dried at 80°C. The characteristics of the resulting propylene random block copolymer (A-3) are shown in Table 1.

[Production Example 4]

Except that a polymerization method is changed as shown below, a method similar to that of Production Example 1 was carried out.

(1) Polymerization

In a 58 L tubular polymerization equipment, propylene was continuously fed at 40 kg/hr; hydrogen at 5 N L/hr; the catalyst slurry prepared in the (3) of Production Example 1 at 3.6 g/hr in terms of the solid catalyst component; and triethyl aluminum at 2.2 g/hr, and the mixture was subjected to polymerization in a full liquid state where no gaseous phase existed in the tubular polymerization equipment. The temperature in the tubular reactor was set at 30°C and pressure was set at 3.2 MPa/G. The catalyst in the reaction is referred to as M1 catalyst.

The resulting slurry was delivered to a 1000 L vessel polymerization equipment equipped with an agitator, and further subjected to polymerization. To the polymerization equipment, propylene was fed at 45 kg/hr, ethylene was fed so that the ethylene concentration in the gaseous phase portion would be 1.6% by mole and hydrogen was fed so that the hydrogen concentration in the gaseous phase portion would be 0.2% by mole. A polymerization reaction was carried out at 72°C under pressure of 3.1 MPa/G.

The resulting slurry was delivered to a 500 L vessel polymerization equipment equipped with an agitator, and further subjected to polymerization. To the polymerization equipment, propylene was fed at 10 kg/hr, ethylene was fed so that the ethylene concentration in the gaseous phase portion would be 1.6% by mole and hydrogen was fed so that the hydrogen concentration in the gaseous phase portion would be 0.2% by mole. A polymerization reaction was carried out at 71°C under pressure of 3.0 MPa/G.

The resulting slurry was delivered to a 500 L vessel polymerization equipment equipped with an agitator, and further subjected to polymerization. To the polymerization equipment, propylene was fed at 10 kg/hr, ethylene was fed so that the ethylene concentration in the gaseous phase portion would be 1.6% by mole and hydrogen was fed so that the hydrogen concentration in the gaseous phase portion would be 0.2% by mole. A polymerization reaction was carried out at 70°C under pressure of 3.0 MPa/G.

The resulting slurry was delivered to a 500 L vessel polymerization equipment equipped with an agitator, and subjected to copolymerization. To the polymerization equipment, propylene was fed at 10 kg/hr and hydrogen was fed so that the hydrogen concentration in the gaseous phase portion would be 0.11% by mole. Polymerization was carried out at 63°C while maintaining the pressure at 2.9 MPa/G by supplying ethylene.

The resulting slurry was, after vaporization, subjected to a gas-solid separation to give a propylene random block copolymer (A-4). The resulting propylene random block copolymer (A-4) was vacuum dried at 80°C. The characteristics of the resulting propylene random block copolymer (A-4) are shown in Table 1.

[Production Example 5]

Except that a polymerization method was changed as shown below, a method similar to that of Production Example 1 was carried out.

(1) Polymerization

In a 58 L tubular polymerization equipment, propylene was continuously fed at 40 kg/hr; hydrogen at 5 N L/hr; the catalyst slurry prepared in the (3) of Production Example 1 at 2.6 g/hr in terms of the solid catalyst component; and triethyl aluminum at 1.6 g/hr, and the mixture was subjected to polymerization in a full liquid state where no gaseous phase existed in the tubular polymerization equipment. The temperature in the tubular reactor was set at 30°C and pressure was set at 3.2 MPa/G. The catalyst in the reaction is referred to as M1 catalyst.

The resulting slurry was delivered to a 1000 L vessel polymerization equipment equipped with an agitator, and further subjected to polymerization. To the polymerization equipment, propylene was fed at 45 kg/hr, ethylene was fed so that the ethylene concentration in the gaseous phase portion would be 3.7% by mole and hydrogen was fed so that the hydrogen concentration in the gaseous phase portion would be 0.3% by mole. A polymerization reaction was carried

out at 72°C under pressure of 3.1 MPa/G.

The resulting slurry was delivered to a 500 L vessel polymerization equipment equipped with an agitator, and further subjected to polymerization. To the polymerization equipment, propylene was fed at 10 kg/hr, ethylene was fed so that the ethylene concentration in the gaseous phase portion would be 3.7% by mole and hydrogen was fed so that the hydrogen concentration in the gaseous phase portion would be 0.3% by mole. A polymerization reaction was carried out at 71°C under pressure of 3.0 MPa/G.

The resulting slurry was delivered to a 500 L vessel polymerization equipment equipped with an agitator, and further subjected to polymerization. To the polymerization equipment, propylene was fed at 10 kg/hr, ethylene was fed so that the ethylene concentration in the gaseous phase portion would be 3.7% by mole and hydrogen was fed so that the hydrogen concentration in the gaseous phase portion would be 0.3% by mole. A polymerization reaction was carried out at 70°C under pressure of 3.0 MPa/G.

The resulting slurry was delivered to a 500 L vessel polymerization equipment equipped with an agitator, and subjected to copolymerization. To the polymerization equipment, propylene was fed at 10 kg/hr and hydrogen was fed so that the hydrogen concentration in the gaseous phase portion would be 0.11% by mole. Polymerization was carried out at 61°C while maintaining the pressure at 2.9 MPa/G by supplying ethylene.

The resulting slurry was, after vaporization, subjected to a gas-solid separation to give a propylene random block copolymer (A-5). The resulting propylene random block copolymer (A-5) was vacuum dried at 80°C. The characteristics of the resulting propylene random block copolymer (A-5) are shown in Table 1.

[Production Example 6]

Except that a polymerization method was changed as shown below, a method similar to that of Production Example 1 was carried out.

(1) Polymerization

In a 58 L tubular polymerization equipment, propylene was continuously fed at 40 kg/hr; hydrogen at 5 N L/hr; the catalyst slurry prepared in the (3) of Production Example 1 at 3.6 g/hr in terms of the solid catalyst component; and triethyl aluminum at 2.2 g/hr, and the mixture was subjected to polymerization in a full liquid state where no gaseous phase existed in the tubular polymerization equipment. The temperature in the tubular reactor was set at 30°C and pressure was set at 3.2 MPa/G. The catalyst in the reaction is referred to as M1 catalyst.

The resulting slurry was delivered to a 1000 L vessel polymerization equipment equipped with an agitator, and further subjected to polymerization. To the polymerization equipment, propylene was fed at 45 kg/hr, ethylene was fed so that the ethylene concentration in the gaseous phase portion would be 1.5% by mole and hydrogen was fed so that the hydrogen concentration in the gaseous phase portion would be 0.2% by mole. A polymerization reaction was carried out at 72°C under pressure of 3.1 MPa/G.

The resulting slurry was delivered to a 500 L vessel polymerization equipment equipped with an agitator, and further subjected to polymerization. To the polymerization equipment, propylene was fed at 10 kg/hr, ethylene was fed so that the ethylene concentration in the gaseous phase portion would be 1.5% by mole and hydrogen was fed so that the hydrogen concentration in the gaseous phase portion would be 0.2% by mole. A polymerization reaction was carried out at 71°C under pressure of 3.0 MPa/G.

The resulting slurry was delivered to a 500 L vessel polymerization equipment equipped with an agitator, and further subjected to polymerization. To the polymerization equipment, propylene was fed at 10 kg/hr, ethylene was fed so that the ethylene concentration in the gaseous phase portion would be 1.5% by mole and hydrogen was fed so that the hydrogen concentration in the gaseous phase portion would be 0.2% by mole. A polymerization reaction was carried out at 70°C under pressure of 3.0 MPa/G.

The resulting slurry was delivered to a 500 L vessel polymerization equipment equipped with an agitator, and subjected to copolymerization. To the polymerization equipment, propylene was fed at 10 kg/hr and hydrogen was fed so that the hydrogen concentration in the gaseous phase portion would be 0.1% by mole. Polymerization was carried out at 48°C while maintaining the pressure at 2.9 MPa/G by supplying ethylene.

The resulting slurry was, after vaporization, subjected to a gas-solid separation to give a propylene random block copolymer (A-6). The resulting propylene random block copolymer (A-6) was vacuum dried at 80°C. The characteristics of the resulting propylene random block copolymer (A-6) are shown in Table 1.

[Production Example 7]

Except that a polymerization method was changed as shown below, a method similar to that of Production Example 1 was carried out.

(1) Polymerization

In a 58 L tubular polymerization equipment, propylene was continuously fed at 40 kg/hr; hydrogen at 5 N L/hr; the catalyst slurry prepared in the (3) of Production Example 1 at 2.7 g/hr in terms of the solid catalyst component; and triethyl aluminum at 1.6 g/hr, and the mixture was subjected to polymerization in a full liquid state where no gaseous phase existed in the tubular polymerization equipment. The temperature in the tubular reactor was set at 30°C and pressure was set at 3.2 MPa/G. The catalyst in the reaction is referred to as M1 catalyst.

The resulting slurry was delivered to a 1000 L vessel polymerization equipment equipped with an agitator, and further subjected to polymerization. To the polymerization equipment, propylene was fed at 45 kg/hr, ethylene was fed so that the ethylene concentration in the gaseous phase portion would be 1.6% by mole and hydrogen was fed so that the hydrogen concentration in the gaseous phase portion would be 0.4% by mole. A polymerization reaction was carried out at 72°C under pressure of 3.1 MPa/G.

The resulting slurry was delivered to a 500 L vessel polymerization equipment equipped with an agitator, and further subjected to polymerization. To the polymerization equipment, propylene was fed at 10 kg/hr, ethylene was fed so that the ethylene concentration in the gaseous phase portion would be 1.6% by mole, and hydrogen was fed so that the hydrogen concentration in the gaseous phase portion would be 0.4% by mole. A polymerization reaction was carried out at 71°C under pressure of 3.0 MPa/G.

The resulting slurry was delivered to a 500 L vessel polymerization equipment equipped with an agitator, and further subjected to polymerization. To the polymerization equipment, propylene was fed at 10 kg/hr, ethylene was fed so that the ethylene concentration in the gaseous phase portion would be 1.6% by mole and hydrogen was fed so that the hydrogen concentration in the gaseous phase portion would be 0.4% by mole. A polymerization reaction was carried out at 70°C under pressure of 3.0 MPa/G.

The resulting slurry was delivered to a 500 L vessel polymerization equipment equipped with an agitator, and subjected to copolymerization. To the polymerization equipment, propylene was fed at 10 kg/hr and hydrogen was fed so that the hydrogen concentration in the gaseous phase portion would be 0.2% by mole. Polymerization was carried out at 61°C while maintaining the pressure at 2.9 MPa/G by supplying ethylene.

The resulting slurry was, after vaporization, subjected to a gas-solid separation to give a propylene random block copolymer (A-7). The resulting propylene random block copolymer (A-7) was vacuum dried at 80°C. The characteristics of the resulting propylene random block copolymer (A-7) are shown in Table 1.

[Production Example 8]

(1) Preparation of Solid Titanium Catalyst Component

In the beginning, 952 g of anhydrous magnesium chloride, 4420 ml of decane and 3906 g of 2-ethylhexyl alcohol were heated at 130°C for 2 hr to give a homogeneous solution. To the solution, 213 g of phthalic anhydride was added, and dissolved by further agitating and mixing for 1 hr at 130°C.

After the thus obtained homogeneous solution was cooled to 23°C, 750 ml of the homogeneous solution was added dropwise over 1 hr to 2000 ml of titanium tetrachloride kept at -20°C. After the dropwise addition, the resulting mixture solution was heated to 110°C over 4 hr. When the temperature reached 110°C, 52.2 g of diisobutyl phthalate (DIBP) was added, and the mixture was kept at the temperature under agitation for 2 hr. Then, the solid portion was collected by hot filtration, suspended again in 2750 ml of titanium tetrachloride, and then heated again at 110°C for 2 hr.

After completion of the heating, the solid portion was collected again by hot filtration, and washed with decane and hexane at 110°C until a titanium compound was not detected in the washing liquid.

The solid titanium catalyst component thus prepared was stored as a hexane slurry, and a part of the slurry was dried and examined for its catalyst composition. The solid titanium catalyst component contained 2% by weight of titanium, 57% by weight of chlorine, 21% by weight of magnesium, and 20% by weight of DIBP.

(2) Production of Prepolymerized Catalyst

In the beginning, 56 g of the transition metal catalyst component, 8.0 g of triethyl aluminum and 80 L of heptane were introduced in a 200 L autoclave equipped with an agitator. While the inside temperature was kept at 5°C, 560 g of propylene was fed, and the mixture was allowed to react for 60 min under agitation. After completion of the polymerization, the solid component was allowed to settle and removal of the supernatant liquid and washing with heptane were repeated twice. The resulting prepolymerized catalyst was suspended again in purified heptane, and the transition metal catalyst component concentration was adjusted to 0.7 g/L by adding heptane. The prepolymerized catalyst contained 10 g of polypropylene per 1 g of the transition metal catalyst component.

(3) Polymerization

In a 58 L tubular polymerization equipment, propylene was continuously fed at 30 kg/hr; ethylene at 0.4 kg/hr; hydrogen at 300 N L/hr; the catalyst slurry at 0.4 g/hr in terms of the solid catalyst component; triethyl aluminum at 2.7 g/hr; and dicyclopentyldimethoxysilane at 1.8 kg/hr, and the mixture was subjected to polymerization in a full liquid state where no gaseous phase existed in the tubular polymerization equipment. The temperature in the tubular reactor was set at 65°C and pressure was set at 3.6 MPa/G. The catalyst in the reaction is referred to as ZN catalyst.

The resulting slurry was delivered to a 100 L vessel polymerization equipment equipped with an agitator, and further subjected to polymerization. To the polymerization equipment, propylene was fed at 15 kg/hr, ethylene was fed at 0.3 kg/hr, and hydrogen was fed so that the hydrogen concentration in the gaseous phase portion would be 15.0% by mole. A polymerization reaction was carried out at 63°C under pressure of 3.4 MPa/G.

The resulting slurry was delivered to a 2.4 L inserted tube, gasified and subjected to a gas-solid separation. After that, the propylene/ethylene copolymer powder was delivered to a 480 L gas phase polymerization equipment, and subjected to ethylene/propylene block copolymerization. Propylene, ethylene and hydrogen were continuously fed so that the gas compositions in the gas phase polymerization equipment were ethylene/(ethylene + propylene) = 0.30 (by mole ratio) and hydrogen/(ethylene + propylene) = 0.066 (by mole ratio). The polymerization reaction at 70°C under pressure of 1.2 MPa/G gave a propylene random block copolymer (A-8).

The resulting propylene random block copolymer (A-8) was vacuum dried at 80°C. The characteristics of the resulting propylene random block copolymer (A-8) are shown in Table 1.

[Production Example 9]

Except that a polymerization method was changed as shown below, a method similar to that of Production Example 1 was carried out.

(1) Polymerization

In a 58 L tubular polymerization equipment, propylene was continuously fed at 57 kg/hr; hydrogen at 2.5 N L/hr; the catalyst slurry prepared in (3) of Production Example 1 at 5.0 g/hr in terms of the solid catalyst component; and triethyl aluminum at 2.3 g/hr, and the mixture was subjected to polymerization in a full liquid state where no gaseous phase existed in the tubular polymerization equipment. The temperature in the tubular reactor was set at 30°C and pressure was set at 2.6 MPa/G. The catalyst in the reaction is referred to as M1 catalyst.

The resulting slurry was delivered to a 1000 L vessel polymerization equipment equipped with an agitator, and further subjected to polymerization. To the polymerization equipment, propylene was fed at 50 kg/hr, ethylene was fed so that the ethylene concentration in the gaseous phase portion would be 1.4% by mole and hydrogen was fed so that the hydrogen concentration in the gaseous phase portion would be 0.2% by mole. A polymerization reaction was carried out at 60°C under pressure of 2.5 MPa/G.

The resulting slurry was delivered to a 500 L vessel polymerization equipment equipped with an agitator, and further subjected to polymerization. To the polymerization equipment, propylene was fed at 11 kg/hr, ethylene was fed so that the ethylene concentration in the gaseous phase portion would be 1.4% by mole and hydrogen was fed so that the hydrogen concentration in the gaseous phase portion would be 0.2% by mole. A polymerization reaction was carried out at 59°C under pressure of 2.4 MPa/G.

The resulting slurry was, after vaporization, subjected to a gas-solid separation to give a propylene-ethylene random copolymer (R-1). The resulting propylene-ethylene random copolymer (R-1) was vacuum dried at 80°C. The characteristics of the resulting propylene-ethylene random copolymer (R-1) are shown in Table 1.

[Production Example 10]

Except that a polymerization method was changed as shown below, a method similar to that of Production Example 1 was carried out.

(1) Polymerization

In a 58 L tubular polymerization equipment, propylene was continuously fed at 57 kg/hr; hydrogen at 2.5 N L/hr; the catalyst slurry prepared in (3) of Production Example 1 at 4.9 g/hr in terms of the solid catalyst component; and triethyl aluminum at 2.3 g/hr, and the mixture was subjected to polymerization in a full liquid state where no gaseous phase existed in the tubular polymerization equipment. The temperature in the tubular reactor was set at 30°C and pressure was set at 2.7 MPa/G. The catalyst in the reaction is referred to as M1 catalyst.

The resulting slurry was delivered to a 1000 L vessel polymerization equipment equipped with an agitator, and further subjected to polymerization. To the polymerization equipment, propylene was fed at 50 kg/hr, ethylene was fed so that the ethylene concentration in the gaseous phase portion would be 3.9% by mole and hydrogen was fed so that the hydrogen concentration in the gaseous phase portion would be 0.28% by mole. A polymerization reaction was carried out at 60°C under pressure of 2.6 MPa/G.
The resulting slurry was delivered to a 500 L vessel polymerization equipment equipped with an agitator, and further subjected to polymerization. To the polymerization equipment, propylene was fed at 11 kg/hr, ethylene was fed so that the ethylene concentration in the gaseous phase portion would be 3.9% by mole and hydrogen was fed so that the hydrogen concentration in the gaseous phase portion would be 0.28% by mole. A polymerization reaction was carried out at 59°C under pressure of 2.5 MPa/G.
The resulting slurry was, after vaporization, subjected to a gas-solid separation to give a propylene-ethylene random copolymer (R-2). The resulting propylene-ethylene random copolymer (R-2) was vacuum dried at 80°C. The characteristics of the resulting propylene-ethylene random copolymer (R-2) are shown in Table 1.

[Production Example 11]

(1) Preparation of Solid Titanium Catalyst Component

In the beginning, 952 g of anhydrous magnesium chloride, 4420 ml of n-decane and 3906 g of 2-ethylhexyl alcohol were heated at 130°C for 2 hr to give a homogeneous solution. To the solution, 213 g of phthalic anhydride was added, and dissolved by heating at 130°C and agitating and mixing for 1 hr.
After the thus obtained homogeneous solution was cooled to 23°C, 750 ml of the homogeneous solution was added dropwise over 1 hr to 2000 ml of titanium tetrachloride kept at -20°C. After the dropwise addition, the resulting mixture solution was heated to 110°C over 4 hr. When the temperature reached 110°C, 52.2 g of diisobutyl phthalate (DIBP) was added, and the mixture was kept at the temperature under agitation for 2 hr.
Then, the solid portion was collected by hot filtration, suspended again in 2750 ml of titanium tetrachloride, and then heated again at 110°C for 2 hr.
After completion of the heating, the solid portion was collected again by hot filtration, and washed with decane and hexane at 110°C until a titanium compound was not detected in the washing liquid.
The solid titanium catalyst component thus prepared was stored as a hexane slurry. A part of the slurry was dried and examined for its catalyst composition.
The solid titanium catalyst component contained 2% by weight of titanium, 57% by weight of chlorine, 21% by weight of magnesium, and 20% by weight of DIBP.

(2) Production of Prepolymerized Catalyst

In the beginning, 56 g of the transition metal catalyst component, 8.0 g of triethyl aluminum and 80 L of heptane were introduced in a 200 L autoclave equipped with an agitator. While the inside temperature was kept at 5°C, 560 g of propylene was introduced, and the mixture was allowed to react for 60 min under agitation. After completion of the polymerization, the solid component was allowed to settle and removal of the supernatant liquid and washing with heptane were repeated twice.
The resulting prepolymerized catalyst was suspended again in purified heptane, and the transition metal catalyst component concentration was adjusted to 0.7 g/L by adding heptane. The polymerized catalyst contained 10 g of polypropylene per 1 g of the transition metal catalyst component.

(3) Polymerization

In a 100 L vessel polymerization equipment equipped with an agitator, the catalyst slurry was continuously fed at 1.1 g/hr in terms of the solid catalyst component; triethyl aluminum at 4.5 g/hr; and cyclohexylmethyldimethoxysilane at 12.5 g/hr. Further, propylene was fed at 110 kg/hr, ethylene was fed so that the ethylene concentration in the gaseous phase would be 0.8% by mole, and hydrogen was fed so that the hydrogen concentration in the gaseous phase would be 0.65% by mole. A polymerization reaction was carried out at 65°C under pressure of 2.7 MPa/G. The catalyst in the reaction is referred to as ZN catalyst.
The resulting slurry was delivered to a 1000 L vessel polymerization equipment equipped with an agitator, and further subjected to polymerization. To the polymerization equipment, propylene was fed at 18 kg/hr, ethylene was fed so that the ethylene concentration in the gaseous phase portion would be 3.4% by mole, 1-butene was fed so that the 1-butene concentration in the gaseous phase portion would be 2.7% by mole, and hydrogen was fed so that the hydrogen concentration in the gaseous phase portion would be 1.8% by mole. A polymerization reaction was carried out at 65°C

under pressure of 2.5 MPa/G.

The resulting slurry was, after vaporization, subjected to a gas-solid separation to give a propylene random copolymer (r-1). The resulting propylene random copolymer (r-1) was vacuum dried at 80°C. The characteristics of the resulting propylene random copolymer (r-1) are shown in Table 1.

[Table 1]

Table 1

| | | Production Example 1 | Production Example 2 | Production Example 3 | Production Example 4 | Production Example 5 | Production Example 6 | Production Example 7 | Production Example 8 | Production Example 9 | Production Example 10 | Production Example 11 |
|---|---|---|---|---|---|---|---|---|---|---|---|---|
| Propylene Random Copolymer | | A-1 | A-2 | A-3 | A-4 | A-5 | A-6 | A-7 | A-8 | R-1 | R-2 | r-1 |
| | Catalyst System | M1 | M1 | M1 | M1 | M1 | M1 | M1 | ZN System | M1 | M1 | ZN System |
| $D_{insol}$ | Ethylene Amount (mol%) | 1.0 | 1.0 | 1.0 | 1.2 | 8.0 | 1.0 | 2.2 | 6.5 | 1.0 | 7.5 | C2=5.3, C4=1.8 |
| | Mw/Mn | 1.9 | 1.9 | 1.9 | 1.9 | 2.0 | 1.9 | 2.1 | 4.4 | 1.9 | 1.9 | 3.5 |
| | 2,1-propylene unit (mol%) | 0 | 0 | 0 | 0 | 0 | 0 | 0 | 0 | 0 | 0 | 0 |
| | 1,3-propylene unit (mol%) | 0.1 | 0.1 | 0.1 | 0.1 | 0.1 | 0.1 | 0.1 | 0 | 0.1 | 0.1 | 0 |
| $D_{sol}$ | Amount (wt%) | 20 | 20 | 20 | 20 | 21 | 20 | 20 | 21 | 0.5> | 0.5> | 5.3 |
| | Ethylene Amount (mol%) | 20 | 30 | 35 | 15 | 20 | 40 | 20 | 40 | - | - | - |
| | [η] (dl/g) | 2.1 | 2.2 | 2.1 | 2.0 | 2.1 | 2.2 | 0.9 | 2.2 | - | - | - |
| | Mw/Mn | 2.0 | 2.1 | 1.9 | 2.0 | 2.1 | 2.0 | 2.0 | 4.8 | - | - | - |
| Propylene Random Copolymer | | A-1 | A-2 | A-3 | A-4 | A-5 | A-6 | A-7 | A-8 | R-1 | R-2 | r-1 |
| Product | MFR (g/10 min) | 5.2 | 5.5 | 5.5 | 5.4 | 5.3 | 5.3 | 18 | 6 | 6.7 | 6 | 7 |
| | Tm (°C) | 137 | 137 | 137 | 136 | 115 | 137 | 136 | 138 | 138 | 113 | 136 |

**EXAMPLE 1**

To 100 parts by weight of the propylene random block copolymer (A-1) produced in Production Example 1, 0.1 parts by weight of a heat stabilizer IRGANOX 1010 (trademark, produced by Ciba-Geigy Corp.), 0.1 parts by weight of a heat stabilizer IRGAFOS168 (trademark, produced by Ciba-Geigy Corp.,), and 0.1 parts by weight of calcium stearate were blended in a tumbler mixer, and melted and kneaded by use of a twin screw extruder to prepare a pelletized polypropylene resin composition, which was formed into a cast film by use of a T-die extruder (Product No.: GT-25A, produced by Plabor Co., Ltd.). Physical properties of the molded articles are shown in Table 2.

**<Melting and Kneading Conditions>**

Corotating twin screw kneader: Product Number NR2-36, manufactured by Nakatani Kikai
Kneading temperature: 180°C
Number of revolutions of screw: 200 rpm
Number of revolutions of feeder: 400 rpm

**<Film Molding>**

25 mm φ T-die extruder: Product Number GT-25A, manufactured by Plabor Co., Ltd.
Extrusion temperature: 230°C
Chill roll temperature: 30°C
Take-over speed: 8.5 m/min
Film thickness: 30 μm

**COMPARATIVE EXAMPLE 1**

Except that, in example 1, 100 parts by weight of the propylene random block copolymer (A-2) produced in Production Example 2 was substituted for 100 parts by weight of the propylene random block copolymer (A-1), the production was carried out similarly to example 1. Physical properties of the molded article are shown in Table 2.

**COMPARATIVE EXAMPLE 2**

Except that, in example 1, 100 parts by weight of the propylene random block copolymer (A-3) produced in Production Example 3 was substituted for 100 parts by weight of the propylene random block copolymer (A-1), the production was carried out similarly to example 1. Physical properties of the molded article are shown in Table 2.

**EXAMPLE 2**

Except that, in example 1, 100 parts by weight of the propylene random block copolymer (A-4) produced in Production Example 4 was substituted for 100 parts by weight of the propylene random block copolymer (A-1), the production was carried out similarly to example 1. Physical properties of the molded article are shown in Table 2.

**EXAMPLE 3**

Except that, in example 1, 100 parts by weight of the propylene random block copolymer (A-5) produced in Production Example 5 was substituted for 100 parts by weight of the propylene random block copolymer (A-1), the production was carried out similarly to example 1. Physical properties of the molded article are shown in Table 2.

**[COMPARATIVE EXAMPLE 3]**

Except that, in example 1, 100 parts by weight of the propylene random block copolymer (A-6) produced in Production Example 6 was substituted for 100 parts by weight of the propylene random block copolymer (A-1), the production was carried out similarly to example 1. Physical properties of the molded article are shown in Table 2.

**[COMPARATIVE EXAMPLE 4]**

Except that, in example 1, 100 parts by weight of the propylene random block copolymer (A-7) produced in Production Example 7 was substituted for 100 parts by weight of the propylene random block copolymer (A-1), the production was carried out similarly to example 1. Physical properties of the molded article are shown in Table 2.

**[COMPARATIVE EXAMPLE 5]**

Except that, in example 1, 100 parts by weight of the propylene random block copolymer (A-8) produced in Production Example 8 was substituted for 100 parts by weight of the propylene random block copolymer (A-1), the production was carried out similarly to example 1. Physical properties of the molded article are shown in Table 2.

**[COMPARATIVE EXAMPLE 6]**

Except that, in example 1, 100 parts by weight of the propylene-ethylene random copolymer (R-1) produced in Production Example 9 was substituted for 100 parts by weight of the propylene random block copolymer (A-1), the production was carried out similarly to example 1. Physical properties of the molded article are shown in Table 2.

**[COMPARATIVE EXAMPLE 7]**

Except that, in example 1, 100 parts by weight of the propylene-ethylene random copolymer (R-2) produced in Production Example 10 was substituted for 100 parts by weight of the propylene random block copolymer (A-1), the production was carried out similarly to example 1. Physical properties of the molded article are shown in Table 2.

**[COMPARATIVE EXAMPLE 8]**

Except that, in example 1, 100 parts by weight of the propylene-based ethylene-butene random copolymer (r-1) produced in Production Example 11 was substituted for 100 parts by weight of the propylene random block copolymer (A-1), the production was carried out similarly to example 1. Physical properties of the molded article are shown in Table 2.

[Table 2]

Table 2

| | | Example 1 | Comparative Example 1 | Comparative Example 2 | Example 2 | Example 3 | Comparative Example 3 | Comparative Example 4 | Comparative Example 5 | Comparative Example 6 | Comparative Example 7 | Comparative Example 8 |
|---|---|---|---|---|---|---|---|---|---|---|---|---|
| Propylene Copolymer | | A-1 | A-2 | A-3 | A-4 | A-5 | A-6 | A-7 | A-8 | R-1 | R-2 | r-1 |
| Product 30 μm Cast Film | MFR (g/10 min) | 5.2 | 5.5 | 5.5 | 5.4 | 5.3 | 5.3 | 18 | 6 | 6.7 | 6 | 7 |
| | Tm (°C) | 137 | 137 | 137 | 136 | 115 | 137 | 136 | 138 | 138 | 113 | 136 |
| | Half Crystallization Time @100°C (min) | 0.44 | 0.44 | 0.43 | 0.56 | Not crystallized | 0.42 | 0.70 | 0.70 | 0.39 | Not crystallized | 1.12 |
| | Young's Modulus | 510 | 600 | 620 | 520 | 350 | 680 | 450 | 470 | 980 | 500 | 560 |
| | Impact Strength @ 0°C | 7 | 26 | 31 | 5 | 27 | 32 | 3 | 20 | 1.6 | 5 | 3 |
| | Minimum Heat seal Temperature (°C) | 130 | 125 | 120 | 125 | 115 | 120 | 130 | 125 | 135 | 125 | 135 |
| | HAZE (%) | 1.0 | 1.2 | 1.0 | 1.0 | 1.0 | 2.5 | 0.8 | 10 | 0.6 | 0.6 | 0.3 |
| | HAZE after Heating (%) | 1.3 | 2.4 | 6.4 | 1.3 | 1.2 | 8 | 8 | 15 | 0.8 | 0.9 | 2.7 |
| | Blocking Factor (mN/cm) | 230 | - | - | 220 | - | - | - | - | 42 | 110 | - |

**[COMPARATIVE EXAMPLE 9]**

To 100 parts by weight of a combination consisting of 80 parts by weight of the propylene-based ethylene-butene random copolymer (r-1) produced in Production Example 11 and 20 parts by weight of propylene-butene random copolymer rubber (trademark: Tafmer XM 7070, produced by Mitsui Chemicals Inc.) (B-d-1), 0.1 parts by weight of a heat stabilizer IRGANOX 1010 (trademark, produced by Ciba-Geigy Corp.), 0.1 parts by weight of a heat stabilizer IRGAFOS 168 (trademark, produced by Ciba-Geigy Corp.,) and 0.1 parts by weight of calcium stearate were blended in a tumbler mixer, and melted and kneaded by use of a twin screw extruder to prepare a pelletized polypropylene resin composition, which was formed into a cast film by use of a T-die extruder (Product No.: GT-25A, produced by Plabor Co., Ltd.). Physical properties of the molded article are shown in Table 3.

**<Melting and Kneading Conditions>**

Corotating twin screw kneader: Product Number NR2-36, manufactured by Nakatani Kikai
Kneading temperature: 180°C
Number of revolutions of screw: 200 rpm
Number of revolutions of feeder: 400 rpm

**<Film Molding>**

25 mm φ T-die extruder: Product Number GT-25A, manufactured by Plabor Co., Ltd.
Extrusion temperature: 230°C
Chill roll temperature: 30°C
Take-over speed: 8.5 m/min
Film thickness: 30 μm

**[COMPARATIVE EXAMPLE 10]**

Except that, in comparative example 9, in place of 20 parts by weight of the propylene-butene random copolymer rubber (B-d-1), 20 parts by weight of propylene-butene random copolymer rubber (trademark: Tafmer BL 2481, produced by Mitsui Chemicals Inc.)(B-d-2) was used, a process was carried out similarly to comparative example 7. Physical properties of the molded article are shown in Table 3.

Physical properties of the films of the propylene random block copolymer (A-2) and propylene random block copolymer (A-3) are summarized in Table 3 compared with those of the blends of propylene-ethylene-butene random copolymer/propylene-butene random copolymer.

The propylene random block copolymers showed comparable low temperature heat seal temperature, less deterioration of transparency during heating and more excellent impact strength, in comparison with the blends of propylene-ethylene-butene random copolymer/propylene-butene random copolymer. Accordingly, it is found that the propylene random block copolymer of the invention may provide functions such as low temperature heat sealability and the like without blending a propylene-butene random copolymer.

[Table 3]

Table 3

| | | Comparative Example 1 | Comparative Example 2 | Comparative Example 9 | Comparative Example 10 |
|---|---|---|---|---|---|
| Propylene Random Block Copolymer (A-2) (PHR) | | 100 | - | - | - |
| Propylene Random Block Copolymer (A-3) (PHR) | | - | 100 | - | - |

(continued)

| | | Comparative Example 1 | Comparative Example 2 | Comparative Example 9 | Comparative Example 10 |
|---|---|---|---|---|---|
| Propylene-Ethylene-Butene Random Copolymer (r-1) | | - | - | 80 | 80 |
| Propylene-Butene Random Copolymer Rubber B-d-1 (PHR) | | - | - | 20 | - |
| Propylene-Butene Random Copolymer Rubber B-d-2 (PHR) | | - | - | - | 20 |
| Product (30 μm Cast Film) | MFR (gliomin) | 5.5 | 5.5 | 7 | 8 |
| | Young's Modulus | 600 | 620 | 470 | 430 |
| | Impact Strength @0°C | 26 | 31 | 8 | 8 |
| | Minimum Heat Seal Temperature (°C) | 125 | 120 | 130 | 120 |
| | HAZE (t) | 1.2 | 1.0 | 0.4 | 0.9 |
| | Haze After Heating (%) | 2.4 | 6.4 | 9 | 10 |

Heat seal strengths at various heat seal temperatures of the propylene random block copolymer (A-2) (melting point: 138°C) are summarized in Table 4 and Fig. 1 shown below.

[Table 4]

Table 4

| | | | Comparative Example 2 | Comparative Example 4 | Comparative Example 5 |
|---|---|---|---|---|---|
| Propylene Copolymer | | | A-2 | R-1 | R-2 |
| Tm | | °C | 137 | 138 | 113 |
| Half Crystallization Time @110°C | | min | 0.44 | 0.39 | not crystallized |
| Heat Seal Strength | Seal Temperature (°C) | - | - | - | - |
| | 110 | N/15 mm width | 0.5 | 0.1 | 0.1 |
| | 115 | | 0.5 | 0.2 | 0.4 |
| | 120 | | 0.9 | 0.4 | 0.5 |
| | 125 | | 2.0 | 0.6 | 1.3 |
| | 130 | | 6.0 | 0.9 | 5.4 |
| | 135 | | 7.2 | 1.4 | 7.1 |
| | 140 | | 7.9 | 2.2 | 7.8 |
| | 145 | | 7.9 | 5.5 | 7.7 |

In Fig. 1, heat seal characteristics of films obtained from the propylene random block copolymer (A-2) having a melting point of 138°C are shown based on the relation between heat seal strengths and heat seal temperatures

(shown by "O" in the drawing). For the purpose of comparison, heat seal characteristics of films obtained from the propylene random copolymer (R-1) of which the melting point is 138°C and $D_{sol}$ is less than 0.5% by weight (shown by "□" in the drawing), and heat seal characteristics of films obtained from the propylene-ethylene random copolymer (R-2) of which the melting point is 113°C and $D_{sol}$ is less than 0.5% by weight (shown by "Δ" in the drawing) are shown together.

As shown in Fig. 1, the propylene random block copolymer (A-2), in spite of being 138°C in the melting point, has low temperature heat sealability and heat seal strength that are equal to or more than those of the propylene-ethylene random copolymer (R-2) having a melting point of 113°C. Furthermore, it is found that the propylene-ethylene random copolymer (R-2) having $D_{sol}$ of less than 0.5% by weight, although having the same melting point of 138°C as that of the propylene random block copolymer (A-2) having a melting point of 138°C, has remarkably poor heat sealability in comparison with the propylene random block copolymer (A-2) having the same melting point because it contains little $D_{sol}$.

The propylene random copolymer (R-2) that has a melting point of 113°C has excellent heat sealability when formed into a film. However, the propylene random copolymer (R-2) having a melting point of 113°C is very slower in crystallization speed compared with that of the propylene random block copolymer (A-2) having a melting point of 138°C, and is very difficult to form a film.

From the results, the propylene random block copolymer (A-2) that satisfies the characteristics of the invention is not only excellent in low temperature heat sealability and heat seal strength, but also excellent in film forming properties, which shows the propylene random block copolymer (A-2) may be suitably used as a heat seal agent.

In the next place, film characteristics of the propylene random block polymer of the invention and the propylene-ethylene random copolymers will be compared taking as examples with the characteristics of the film of the propylene random block copolymer (A-1), the characteristics of the film of the propylene-ethylene random copolymer (R-1) and the characteristics of the film of the propylene-ethylene random copolymer (R-2).

As shown in Fig. 5, the propylene random block copolymer (A-1), in comparison with the propylene random copolymers, is higher in blocking factor but does not substantially reduce transparency during heating, which shows the propylene random block copolymer (A-1) is substantially free from a bleed component. Furthermore, the propylene random block copolymer (A-1), which has a relatively high melting point of 138°C, is high in heat resistance and high in blocking factor.

With these characteristics, the propylene random block copolymer of the invention may be suitably used for self-adhesive re-peelable surface protective films.

[Table 5]

Table 5

| | | Example 1 | Comparative Example 6 | Comparative Example 7 |
|---|---|---|---|---|
| Propylene Polymer | | A-1 | R-1 | R-2 |
| Product (30 μm cast film) | MFR (g/10 min) | 5.2 | 6.7 | 6 |
| | Tm (°C) | 137 | 138 | 113 |
| | Young's Modulus | 510 | 980 | 500 |
| | HAZE (%) | 1.0 | 0.6 | 0.6 |
| | HAZE After Heating (%) | 1.3 | 0.8 | 0.9 |
| | Blocking Factor (mN/cm) | 230 | 42 | 110 |

**[COMPARATIVE EXAMPLE 11]**

A polyethylene resin (trademark: Mirason 11, produced by Prime Polymer Co., Ltd.)(C-1) was formed into a cast film by use of a T-die extruder (product Number: GT-25A, produced by Plabor Co., Ltd.). Physical properties of the molded article are shown in Table 6.

**<Film Molding>**

25 mm φ T-die extruder: Product Number GT-25A, produced by Plabor Co., Ltd.
Extrusion temperature: 230°C
Chill roll temperature: 30°C
Take-over speed: 8.5 m/min
Film thickness: 30 μm

**[COMPARATIVE EXAMPLE 12]**

A polyethylene resin (trademark: 15100C, produced by Prime Polymer Co., Ltd.)(C-2) was formed into a cast film by use of a T-die extruder (product Number: GT-25A, produced by Plabor Co., Ltd.). Physical properties of a molded article are shown in Table 6.

**<Film Molding>**

25 mm φ T-die extruder: Product Number GT-25A, produced by Plabor Co., Ltd.
Extrusion temperature: 230°C
Chill roll temperature: 30°C
Take-over speed: 8.5 m/min
Film thickness: 30 μm

Physical properties of the propylene random block copolymer (A-2) of the invention and the polyethylene resins are compared and the results are summarized in Table 6.

The propylene random block copolymer (A-2) is, while having comparable low temperature heat sealability to that of the polyethylene resin (C-1), higher in the Young's modulus. As the result, the propylene random block copolymer (A-2) may form a film thinner than an existing polyethylene resin sealant film.

[Table 6]

Table 6

| | | Comparative Example 1 | Comparative Example 11 | Comparative Example 12 |
|---|---|---|---|---|
| Polyethylene Resin | | - | C-1 | C-2 |
| Propylene copolymer | | A-2 | - | - |
| Product (30 μm cast film) | MFR (g/10 min) | 5.5 | 14 | 22 |
| | Young's Modulus | 600 | 180 | 180 |
| | Impact Strength @ 0°C | 26 | 18 | 14 |
| | Minimum Heat Seal Temperature (°C) | 125 | 125 | 115 |
| | HAZE (%) | 1.2 | 22 | 10 |
| | HAZE After Heating (%) | 2.4 | 24 | 11 |

**[Production Example 12]**

Except that a polymerization method was changed as shown below, a method similar to that of Production Example 1 was carried out.

**(1) Polymerization**

In a 58 L tubular polymerization equipment, propylene was continuously fed at 40 kg/hr; hydrogen at 5 N L/hr;

the catalyst slurry produced in (3) of Production Example 1 at 2.6 g/hr in terms of the solid catalyst component; and triethyl aluminum at 1.6 g/hr, and the mixture was subjected to polymerization in a full liquid state where no gaseous phase existed in the tubular polymerization equipment. The temperature in the tubular reactor was set at 30°C and pressure was set at 3.2 MPa/G. The catalyst in the reaction is referred to as M1 catalyst.

The resulting slurry was delivered to a 1000 L vessel polymerization equipment equipped with an agitator, and further subjected to polymerization. To the polymerization equipment, propylene was fed at 45 kg/hr, ethylene was fed so that the ethylene concentration in the gaseous phase would be 0.8% by mole, and hydrogen was fed so that the hydrogen concentration in the gaseous phase portion would be 0.4% by mole. A polymerization reaction was carried out at 72°C under pressure of 3.1 MPa/G.

The resulting slurry was delivered to a 500 L vessel polymerization equipment equipped with an agitator, and further subjected to polymerization. To the polymerization equipment, propylene was fed at 10 kg/hr, ethylene was fed so that the ethylene concentration in the gaseous phase would be 0.8% by mole, and hydrogen was fed so that the hydrogen concentration in the gaseous phase portion would be 0.4% by mole. A polymerization reaction was carried out at 71°C under pressure of 3.0 MPa/G.

The resulting slurry was delivered to a 500 L vessel polymerization equipment equipped with an agitator, and further subjected to polymerization. To the polymerization equipment, propylene was fed at 10 kg/hr, ethylene was fed so that the ethylene concentration in the gaseous phase would be 0.8% by mole, and hydrogen was fed so that the hydrogen concentration in the gaseous phase portion would be 0.4% by mole. A polymerization reaction was carried out at 70°C under pressure of 3.0 MPa/G.

The resulting slurry was delivered to a 500 L vessel polymerization equipment equipped with an agitator, and subjected to copolymerization. To the polymerization equipment, propylene was fed at 10 kg/hr and hydrogen was fed so that the hydrogen concentration in the gaseous phase portion would be 0.11% by mole. Polymerization was carried out at 61°C while maintaining the pressure at 2.9 MPa/G by supplying ethylene.

The resulting slurry was, after vaporization, subjected to a gas-solid separation to give a propylene random block copolymer (A-9). The resulting propylene random block copolymer (A-9) was vacuum dried at 80°C. The characteristics of the resulting propylene random block copolymer (A-9) are shown in Table 7.

[Production Example 13]

Except that a polymerization method was changed as shown below, a method similar to that of Production Example 1 was carried out.

(1) Polymerization

In a 58 L tubular polymerization equipment, propylene was continuously fed at 40 kg/hr; hydrogen at 5 N L/hr; the catalyst slurry produced in (3) of Production Example 1 at 2.6 g/hr in terms of the solid catalyst component; and triethyl aluminum at 1.6 g/hr, and the mixture was subjected to polymerization in a full liquid state where no gaseous phase existed in the tubular polymerization equipment. The temperature in the tubular reactor was set at 30°C and pressure was set at 3.2 MPa/G. The catalyst in the reaction is referred to as M1 catalyst.

The resulting slurry was delivered to a 1000 L vessel polymerization equipment equipped with an agitator, and further subjected to polymerization. To the polymerization equipment, propylene was fed at 45 kg/hr, ethylene was fed so that the ethylene concentration in the gaseous phase would be 0.8% by mole, and hydrogen was fed so that the hydrogen concentration in the gaseous phase portion would be 0.4% by mole. A polymerization reaction was carried out at 72°C under pressure of 3.1 MPa/G.

The resulting slurry was delivered to a 500 L vessel polymerization equipment equipped with an agitator, and further subjected to polymerization. To the polymerization equipment, propylene was fed at 10 kg/hr, ethylene was fed so that the ethylene concentration in the gaseous phase would be 0.8% by mole, and hydrogen was fed so that the hydrogen concentration in the gaseous phase portion would be 0.4% by mole. A polymerization reaction was carried out at 71°C under pressure of 3.0 MPa/G.

The resulting slurry was delivered to a 500 L vessel polymerization equipment equipped with an agitator, and further subjected to polymerization. To the polymerization equipment, propylene was fed at 10 kg/hr, ethylene was fed so that the ethylene concentration in the gaseous phase would be 0.8% by mole, and hydrogen was fed so that the hydrogen concentration in the gaseous phase portion would be 0.4% by mole. A polymerization reaction was carried out at 70°C under pressure of 3.0 MPa/G.

The resulting slurry was delivered to a 500 L vessel polymerization equipment equipped with an agitator, and subjected to copolymerization. To the polymerization equipment, propylene was fed at 10 kg/hr and hydrogen was fed so that the hydrogen concentration in the gaseous phase portion would be 0.11% by mole. Polymerization was carried out at 61°C while maintaining the pressure at 2.9 MPa/G by supplying ethylene.

The resulting slurry was, after vaporization, subjected to a gas-solid separation to give a propylene random block copolymer (A-10). The resulting propylene random block copolymer (A-10) was vacuum dried at 80°C. The characteristics of the resulting propylene random block copolymer (A-10) are shown in Table 7.

[Production Example 14]

(1) Production of Solid Catalyst Carrier

In a 1 L branched flask, 300 g of $SiO_2$ was sampled and 800 ml of toluene was added to prepare a slurry. In the next place, the slurry was transferred into a 5 L 4-neck flask, and 260 ml of toluene was added. 2830 ml of a methylaluminoxane (hereinafter referred to as MAO)-toluene solution (10% by weight solution, produced by Albemar Inc.) was added thereto, and the mixture was agitated at room temperature for 30 min, heated to 110°C over 1 hr and allowed to react for 4 hr. After completion of the reaction, the mixture was cooled to room temperature. After the cooling, supernatant toluene was removed and fresh toluene was substituted for it until the degree of substitution was 95%.

(2) Production of Solid Catalyst Component (supporting a metal catalyst component on the carrier)

In a glove box, 2.0 g of [3-(1 ',1 ',4',4',7',7',10',10'-octamethyloctahydrodibenzo[b,h]fluorenyl)(1,1,3-trimethyl-5-tert-butyl-1,2,3,3a-tetrahydropentalene)]zirconium dichloride (M2) synthesized according to a description of WO2006/068308 was sampled in a 5 L four neck flask. The flask was taken out of the glove box, 0.46 L of toluene and 1.4 L of the MAO/$SiO_2$/toluene slurry prepared in the (1) were added thereto under a nitrogen atmosphere, and the resulting mixture was agitated for 30 min to give a supported catalyst. The resulting [3-(1',1',4',4',7',7',10',10'-octamethyloctahydrodibenzo[b,h]fluorenyl)(1,1,3-trimethyl-5-tert-butyl-1,2,3,3a-tetrahydropentalene)]zirconium dichloride/MAO/$SiO_2$/toluene slurry was subjected to substitution by n-heptane to 99%, and the final slurry amount was adjusted to 4.5 L. The operation was carried out at room temperature.

(3) Production of Prepolymerized Catalyst

202 g of the solid catalyst component prepared in the (2), 109 ml of triethyl aluminum and 100 L of heptane were introduced in a 200 L autoclave equipped with an agitator. While the inside temperature was kept at 15 to 20°C, 2020 g of ethylene was introduced, and the mixture was allowed to react for 180 min under agitation. After completion of the polymerization, the solid component was allowed to settle, and removal of the supernatant liquid and washing with heptane were repeated twice. The resulting prepolymerized catalyst was suspended again in purified heptane, and the solid catalyst component concentration was adjusted to 2 g/L by adding heptane. The prepolymerized catalyst contained 10 g of polyethylene per 1 g of the solid catalyst component.

(4) Polymerization

In a 58 L tubular polymerization equipment, propylene was continuously fed at 40 kg/hr; hydrogen at 5 N L/hr; the catalyst slurry produced in (3) of Production Example 13 at 1.6 g/hr in terms of the solid catalyst component; and triethyl aluminum at 1.0 g/hr, and the mixture was subjected to polymerization in a full liquid state where no gaseous phase existed in the tubular polymerization equipment. The temperature in the tubular reactor was set at 30°C and pressure was set at 3.2 MPa/G. The catalyst in the reaction is referred to as M2 catalyst.

The resulting slurry was delivered to a 1000 L vessel polymerization equipment equipped with an agitator, and further subjected to polymerization. To the polymerization equipment, propylene was fed at 45 kg/hr, ethylene was fed so that the ethylene concentration in the gaseous phase would be 0.7% by mole, and hydrogen was fed so that the hydrogen concentration in the gaseous phase portion would be 0.5% by mole. A polymerization reaction was carried out at 72°C under pressure of 3.1 MPa/G.

The resulting slurry was delivered to a 500 L vessel polymerization equipment equipped with an agitator, and further subjected to polymerization. To the polymerization equipment, propylene was fed at 10 kg/hr, ethylene was fed so that the ethylene concentration in the gaseous phase would be 0.7% by mole, and hydrogen was fed so that the hydrogen concentration in the gaseous phase portion would be 0.5% by mole. A polymerization reaction was carried out at 71°C under pressure of 3.0 MPa/G.

The resulting slurry was delivered to a 500 L vessel polymerization equipment equipped with an agitator, and further subjected to polymerization. To the polymerization equipment, propylene was fed at 10 kg/hr, ethylene was fed so that the ethylene concentration in the gaseous phase would be 0.7% by mole, and hydrogen was fed so that the hydrogen concentration in the gaseous phase portion would be 0.5% by mole. A polymerization reaction was carried out at 70°C under pressure of 3.0 MPa/G.

The resulting slurry was delivered to a 500 L vessel polymerization equipment equipped with an agitator, and subjected to copolymerization. To the polymerization equipment, propylene was fed at 10 kg/hr and hydrogen was fed so that the hydrogen concentration in the gaseous phase portion would be 0.11% by mole. Polymerization was carried out at 61°C while maintaining the pressure at 2.9 MPa/G by supplying ethylene.

The resulting slurry was, after vaporization, subjected to a gas-solid separation to give a propylene random block copolymer (A-11). The resulting propylene random block copolymer (A-11) was vacuum dried at 80°C. The characteristics of the resulting propylene random block copolymer (A-11) are shown in Table 7.

[Production Example 15]

Except that a polymerization method was changed as shown below, a method similar to that of Production Example 14 was applied.

(1) Polymerization

In a 58 L tubular polymerization equipment, propylene was continuously fed at 40 kg/hr; hydrogen at 5 N L/hr; the catalyst slurry produced in (3) of Production Example 13 at 1.6 g/hr in terms of the solid catalyst component; and triethyl aluminum at 1.0 g/hr, and the mixture was subjected to polymerization in a full liquid state where no gaseous phase existed in the tubular polymerization equipment. The temperature in the tubular reactor was set at 30°C and pressure was set at 3.2 MPa/G. The catalyst in the reaction is referred to as M2 catalyst.

The resulting slurry was delivered to a 1000 L vessel polymerization equipment equipped with an agitator, and further subjected to polymerization. To the polymerization equipment, propylene was fed at 45 kg/hr, ethylene was fed so that the ethylene concentration in the gaseous phase would be 0.7% by mole, and hydrogen was fed so that the hydrogen concentration in the gaseous phase portion would be 0.5% by mole. A polymerization reaction was carried out at 72°C under pressure of 3.1 MPa/G.

The resulting slurry was delivered to a 500 L vessel polymerization equipment equipped with an agitator, and further subjected to polymerization. To the polymerization equipment, propylene was fed at 10 kg/hr, ethylene was fed so that the ethylene concentration in the gaseous phase would be 0.7% by mole, and hydrogen was fed so that the hydrogen concentration in the gaseous phase portion would be 0.5% by mole. A polymerization reaction was carried out at 71°C under pressure of 3.0 MPa/G.

The resulting slurry was delivered to a 500 L vessel polymerization equipment equipped with an agitator, and further subjected to polymerization. To the polymerization equipment, propylene was fed at 10 kg/hr, ethylene was fed so that the ethylene concentration in the gaseous phase would be 0.7% by mole, and hydrogen was fed so that the hydrogen concentration in the gaseous phase portion would be 0.5% by mole. A polymerization reaction was carried out at 70°C under pressure of 3.0 MPa/G.

The resulting slurry was delivered to a 500 L vessel polymerization equipment equipped with an agitator, and subjected to copolymerization. To the polymerization equipment, propylene was fed at 10 kg/hr and hydrogen was fed so that the hydrogen concentration in the gaseous phase portion would be 0.11% by mole. Polymerization was carried out at 61°C while maintaining the pressure at 2.9 MPa/G by supplying ethylene.

The resulting slurry was, after vaporization, subjected to a gas-solid separation to give a propylene random block copolymer (A-12). The resulting propylene random block copolymer (A-12) was vacuum dried at 80°C. The characteristics of the resulting propylene random block copolymer (A-12) are shown in Table 7.

[Production Example 16]

Except that a polymerization method was changed as shown below, a method similar to that of Production Example 1 was carried out.

(1) Polymerization

In a 58 L tubular polymerization equipment, propylene was continuously fed at 40 kg/hr; hydrogen at 5 N L/hr; the catalyst slurry produced in (3) of Production Example 1 at 2.6 g/hr in terms of the solid catalyst component; and triethyl aluminum at 1.6 g/hr, and the mixture was subjected to polymerization in a full liquid state where no gaseous phase existed. The temperature in the tubular reactor was set at 30°C and pressure was set at 3.2 MPa/G. The catalyst in the reaction is referred to as M1 catalyst.

The resulting slurry was delivered to a 1000 L vessel polymerization equipment equipped with an agitator, and further subjected to polymerization. To the polymerization equipment, propylene was fed at 45 kg/hr, ethylene was fed so that the ethylene concentration in the gaseous phase would be 0.8% by mole, and hydrogen was fed so that the

hydrogen concentration in the gaseous phase portion would be 0.4% by mole. A polymerization reaction was carried out at 72°C under pressure of 3.1 MPa/G.

The resulting slurry was delivered to a 500 L vessel polymerization equipment equipped with an agitator, and further subjected to polymerization. To the polymerization equipment, propylene was fed at 10 kg/hr, ethylene was fed so that the ethylene concentration in the gaseous phase would be 0.8% by mole, and hydrogen was fed so that the hydrogen concentration in the gaseous phase portion would be 0.4% by mole. A polymerization reaction was carried out at 71°C under pressure of 3.0 MPa/G.

The resulting slurry was delivered to a 500 L vessel polymerization equipment equipped with an agitator, and further subjected to polymerization. To the polymerization equipment, propylene was fed at 10 kg/hr, ethylene was fed so that the ethylene concentration in the gaseous phase would be 0.8% by mole, and hydrogen was fed so that the hydrogen concentration in the gaseous phase portion would be 0.4% by mole. A polymerization reaction was carried out at 70°C under pressure of 3.0 MPa/G.

The resulting slurry was delivered to a 500 L vessel polymerization equipment equipped with an agitator, and subjected to copolymerization. To the polymerization equipment, propylene was fed at 10 kg/hr and hydrogen was fed so that the hydrogen concentration in the gaseous phase portion would be 0.11% by mole. Polymerization was carried out at 54°C while maintaining the pressure at 2.9 MPa/G by supplying ethylene.

The resulting slurry was, after vaporization, subjected to a gas-solid separation to give a propylene random block copolymer (A-13). The resulting propylene random block copolymer (A-13) was vacuum dried at 80°C. The characteristics of the resulting propylene random block copolymer (A-13) are shown in Table 7.

[Production Example 17]

Except that a polymerization method was changed as shown below, a method similar to that of Production Example 1 was applied.

(1) Polymerization

In a 58 L tubular polymerization equipment, propylene was continuously fed at 40 kg/hr; hydrogen at 5 N L/hr; the catalyst slurry produced in (3) of Production Example 1 at 2.6 g/hr in terms of the solid catalyst component; and triethyl aluminum at 1.6 g/hr, and the mixture was subjected to polymerization in a full liquid state where no gaseous phase existed in the tubular polymerization equipment. The temperature in the tubular reactor was set at 30°C and pressure was set at 3.2 MPa/G. The catalyst in the reaction is referred to as M1 catalyst.

The resulting slurry was delivered to a 1000 L vessel polymerization equipment equipped with an agitator, and further subjected to polymerization. To the polymerization equipment, propylene was fed at 45 kg/hr, ethylene was fed so that the ethylene concentration in the gaseous phase would be 0.8% by mole, and hydrogen was fed so that the hydrogen concentration in the gaseous phase portion would be 0.8% by mole. A polymerization reaction was carried out at 72°C under pressure of 3.1 MPa/G.

The resulting slurry was delivered to a 500 L vessel polymerization equipment equipped with an agitator, and further subjected to polymerization. To the polymerization equipment, propylene was fed at 10 kg/hr, ethylene was fed so that the ethylene concentration in the gaseous phase would be 0.8% by mole, and hydrogen was fed so that the hydrogen concentration in the gaseous phase portion would be 0.8% by mole. A polymerization reaction was carried out at 71°C under pressure of 3.0 MPa/G.

The resulting slurry was delivered to a 500 L vessel polymerization equipment equipped with an agitator, and further subjected to polymerization. To the polymerization equipment, propylene was fed at 10 kg/hr, ethylene was fed so that the ethylene concentration in the gaseous phase would be 0.8% by mole, and hydrogen was fed so that the hydrogen concentration in the gaseous phase portion would be 0.8% by mole. A polymerization reaction was carried out at 70°C under pressure of 3.0 MPa/G.

The resulting slurry was delivered to a 500 L vessel polymerization equipment equipped with an agitator, and subjected to copolymerization. To the polymerization equipment, propylene was fed at 10 kg/hr and hydrogen was fed so that the hydrogen concentration in the gaseous phase portion would be 0.2% by mole. Polymerization was carried out at 61°C while maintaining the pressure at 2.9 MPa/G by supplying ethylene.

The resulting slurry was, after vaporization, subjected to a gas-solid separation to give a propylene random block copolymer (A-14). The resulting propylene random block copolymer (A-14) was vacuum dried at 80°C. The characteristics of the resulting propylene random block copolymer (A-14) are shown in Table 7.

[Production Example 18]

Except that a polymerization method was changed as shown below, a method similar to that of Production

Example 1 was applied.

(1) Polymerization

In a 58 L tubular polymerization equipment, propylene was continuously fed at 57 kg/hr; hydrogen at 2.5 N L/hr; the catalyst slurry produced in (3) of Production Example 1 at 4.2 g/hr in terms of the solid catalyst component; and triethyl aluminum at 2.6 g/hr, and the mixture was subjected to polymerization in a full liquid state where no gaseous phase existed in the tubular polymerization equipment. The temperature in the tubular reactor was set at 30°C and pressure was set at 2.6 MPa/G. The catalyst in the reaction is referred to as M1 catalyst.
The resulting slurry was delivered to a 1000 L vessel polymerization equipment equipped with an agitator, and further subjected to polymerization. To the polymerization equipment, propylene was fed at 50 kg/hr, ethylene was fed so that the ethylene concentration in the gaseous phase would be 0.8% by mole, and hydrogen was fed so that the hydrogen concentration in the gaseous phase portion would be 0.4% by mole. A polymerization reaction was carried out at 60°C under pressure of 2.5 MPa/G.
The resulting slurry was delivered to a 500 L vessel polymerization equipment equipped with an agitator, and further subjected to polymerization. To the polymerization equipment, propylene was fed at 11 kg/hr, ethylene was fed so that the ethylene concentration in the gaseous phase would be 0.8% by mole, and hydrogen was fed so that the hydrogen concentration in the gaseous phase portion would be 0.4% by mole. A polymerization reaction was carried out at 59°C under pressure of 2.4 MPa/G.
The resulting slurry was, after vaporization, subjected to a gas-solid separation to give a propylene-ethylene random copolymer (R-3). The resulting propylene-ethylene random copolymer (R-3) was vacuum dried at 80°C. The characteristics of the resulting propylene-ethylene random copolymer (R-3) are shown in Table 7.

[Production Example 19]

Except that a polymerization method was changed as shown below, a method similar to that of Production Example 1 was applied.

(1) Polymerization

In a 58 L tubular polymerization equipment, propylene was continuously fed at 57 kg/hr; hydrogen at 2.5 N L/hr; the catalyst slurry produced in (3) of Production Example 1 at 3.1 g/hr in terms of the solid catalyst component; and triethyl aluminum at 1.9 g/hr, and the mixture was subjected to polymerization in a full liquid state where no gaseous phase existed in the tubular polymerization equipment. The temperature in the tubular reactor was set at 30°C and pressure was set at 2.7 MPa/G. The catalyst in the reaction is referred to as M1 catalyst.
The resulting slurry was delivered to a 1000 L vessel polymerization equipment equipped with an agitator, and subjected to further polymerization. To the polymerization equipment, propylene was fed at 50 kg/hr, ethylene was fed so that the ethylene concentration in the gaseous phase would be 2.7% by mole, and hydrogen was fed so that the hydrogen concentration in the gaseous phase portion would be 0.4% by mole. A polymerization reaction was carried out at 60°C under pressure of 2.6 MPa/G.
The resulting slurry was delivered to a 500 L vessel polymerization equipment equipped with an agitator, and subjected to further polymerization. To the polymerization equipment, propylene was fed at 11 kg/hr, ethylene was fed so that the ethylene concentration in the gaseous phase would be 2.7% by mole, and hydrogen was fed so that the hydrogen concentration in the gaseous phase portion would be 0.4% by mole. A polymerization reaction was carried out at 59°C under pressure of 2.5 MPa/G.
The resulting slurry was, after vaporization, subjected to a gas-solid separation to give a propylene-ethylene random copolymer (R-4). The resulting propylene-ethylene random copolymer (R-4) was vacuum dried at 80°C. The characteristics of the resulting propylene-ethylene random copolymer (R-4) are shown in Table 7.

[Production Example 20]

Except that a polymerization method was changed as shown below, a method similar to that of Production Example 8 was applied.

(1) Polymerization

In a 58 L tubular polymerization equipment, propylene was continuously fed at 30 kg/hr; ethylene at 0.2 kg/hr; hydrogen at 250 N L/hr; the catalyst slurry at 0.4 g/hr in terms of the solid catalyst component; triethyl aluminum at 1.9

g/hr; and dicyclopentyldimethoxysilane at 1.9 g/hr, and the mixture was subjected to polymerization in a full liquid state where no gaseous phase existed in the tubular polymerization equipment. The temperature in the tubular reactor was set at 65°C and pressure was set at 3.6 MPa/G. The catalyst in the reaction is referred to as ZN catalyst.

The resulting slurry was delivered to a 100 L vessel polymerization equipment equipped with an agitator, and further subjected to polymerization. To the polymerization equipment, propylene was fed at 15 kg/hr, ethylene was fed at 0.2 kg/hr, and hydrogen was fed so that the hydrogen concentration in the gaseous phase portion would be 5.0% by mole. A polymerization reaction was carried out at 63°C under pressure of 3.4 MPa/G.

The resulting slurry was delivered to a 2.4 L inserted tube, gasified and subjected to a gas-solid separation. After that the propylene/ethylene copolymer powder was delivered to a 480 L gas phase polymerization equipment, and subjected to ethylene/propylene block copolymerization. Propylene, ethylene and hydrogen were continuously fed so that the gas compositions in the gas phase polymerization equipment were ethylene/(ethylene + propylene) = 0.11 (by mole ratio) and hydrogen/(ethylene + propylene) = 0.024 (by mole ratio). A polymerization reaction was carried out at 70°C under pressure of 1.2 MPa/G, thereby a propylene random block copolymer (A-15) was obtained.

The resulting propylene random block copolymer (A-15) was vacuum dried at 80°C. The characteristics of the resulting propylene random block copolymer (A-15) are shown in Table 7.

[Production Example 21]

Except that the polymerization method was changed as shown below, a method similar to that of Production Example 8 was applied.

(1) Polymerization

In a 500 L vessel polymerization equipment provided with an agitator, propylene was fed at 130 kg/hr and hydrogen was fed so that the hydrogen concentration in the gaseous phase would be 5% by mole. The catalyst slurry produced in (3) of Comparative Example 5 was continuously fed at 1.3 g/hr in terms of the solid catalyst component; triethyl aluminum at 5.9 g/hr; and dicyclopentyldimethoxysilane at 5.9 g/hr. The polymerization temperature was set at 65°C and pressure was set at 3.0 MPa/G. The catalyst in the reaction is referred to as ZN catalyst.

The resulting slurry was, after vaporization, subjected to a gas-solid separation to give a propylene-ethylene random copolymer rubber (R-5). The resulting propylene-ethylene random copolymer rubber (R-5) was vacuum dried at 80°C. The characteristics of the resulting propylene-ethylene random copolymer rubber (R-5) are shown in Table 7.

[Production Example 22]

Except that the polymerization method was changed as shown below, a method similar to that of Production Example 1 was applied.

(1) Polymerization

In a 30 L SUS autoclave thoroughly purged with nitrogen and set at 10°C, liquid propylene was introduced by 9 kg and ethylene was introduced to a partial pressure of 0.5 MPa. The autoclave was heated up to 45°C under sufficient agitation, and a mixed solution of 300 ml of heptane containing 0.6 g of the solid catalyst component and 0.5 ml of triethyl aluminum was introduced from a catalyst inlet pot under pressure by use of nitrogen. The catalyst in the reaction is referred to as M1 catalyst.

The polymerization was carried out at 60°C for 20 min, and then methanol was added to stop the polymerization. After completion of the polymerization, the autoclave was sufficiently purged with nitrogen to remove propylene, and a polymer (B-a-1) was fractionated. The polymer was vacuum dried at 80°C. The physical properties of the resulting propylene copolymer (B-a-1) are shown in Table 7.

[Table 7]

Table 7

| | | Production Example 12 | Production Example 13 | Production Example 14 | Production Example 15 | Production Example 16 | Production Example 17 | Production Example 18 | Production Example 19 | Production Example 20 | Production Example 21 | Production Example 22 |
|---|---|---|---|---|---|---|---|---|---|---|---|---|
| Propylene Copolymer | | A-9 | A-10 | A-11 | A-12 | A-13 | A-14 | R-3 | R-4 | A-15 | R-5 | B-a-1 |
| | Catalyst System | M1 | M1 | M2 | M2 | M1 | M1 | M1 | M1 | ZN System | 2N System | M1 |
| $D_{insol}$ | Ethylene Amount (mol%) | 1.1 | 1.1 | 1.8 | 1.8 | 1.1 | 1.0 | 1.1 | 5.6 | 3.7 | 3.7 | - |
| | Nw/Mn | 1.9 | 1.9 | 2.3 | 2.3 | 1.9 | 2.1 | 1.9 | 2 | 4.4 | 4.4 | - |
| | 2,1-propylene unit (mol%) | 0 | 0 | 0 | 0 | 0 | 0 | 0 | 0 | 0 | 0 | - |
| | 1,3-propylene unit (mol%) | 0.1 | 0.1 | 0 | 0 | 0.1 | 0.1 | 0.1 | 0.1 | 0 | 0 | - |
| $D_{sol}$ | Amount (Wt%) | 15 | 20 | 15 | 20 | 20 | 20 | 0.5> | 0.5> | 15 | 3.1 | 100 |
| | Ethylene Amount (mol%) | 20 | 20 | 21 | 21 | 30 | 21 | - | - | 22 | - | 20 |
| | (η) (d1/g) | 2.1 | 2.1 | 2.0 | 2.0 | 2.1 | 0.9 | - | - | 2.2 | - | 2.0 |
| | Mw/Mn | 2.0 | 2.0 | 2.3 | 2.3 | 2.0 | 2.3 | - | - | 4.8 | - | 2.1 |
| Pellet | MFR (g/10 min) | 17 | 15 | 21 | 18 | 15 | 50 | 26 | 21 | 15 | 20 | - |
| | Tm (°C) | 143 | 143 | 149 | 149 | 143 | 143 | 143 | 125 | 147 | 147 | - |

## EXAMPLE 4

To 100 parts by weight of the propylene random block copolymer (A-9) produced in Production Example 12, 0.3 parts by weight of a nucleating agent Adekastab NA21 (trademark, produced by Adeka Corporation), 0.1 parts by weight of a heat stabilizer IRGANOX 1010 (trademark, produced by Ciba-Geigy Corp.), 0.1 parts by weight of a heat stabilizer IRGAFOS 168 (trademark, produced by Ciba-Geigy Corp.) and 0.1 parts by weight of calcium stearate were blended in a tumbler mixer, and melted and kneaded by use of a twin screw extruder to prepare a pelletized polypropylene resin composition, which was formed into an ASTM test specimen and a square plate (for measurement of the HAZE and high-speed surface impact) by use of an injection molding machine. Physical properties of the molded articles are shown in Table 8.

<Melting and Kneading Conditions>

Corotating twin screw kneader: Product Number NR2-36, produced by Nakatani Kikai
Kneading temperature: 190°C
Number of revolutions of screw: 200 rpm
Number of revolutions of feeder: 400 rpm

<Injection Molding Conditions for ASTM Test Specimen>

Injection molding machine: Product Number IS100, produced by Toshiba Machine Co., Ltd.
Cylinder temperature: 190°C
Mold temperature: 40°C

**<Injection Molding Conditions for Square Plate>**

Injection molding machine: Product Number AUTOSHOT T series MODEL 100D, produced by FANUC Co., Ltd.
Cylinder temperature: 210°C
Mold temperature: 40°C

## EXAMPLE 5

Except that, in example 4, 100 parts by weight of the propylene random block copolymer (A-10) produced in Production Example 13 was substituted for 100 parts by weight the propylene random block copolymer (A-9), the production was carried out similarly to example 4. Physical properties of the molded articles are shown in Table 8.

## EXAMPLE 6

Except that, in example 4, 100 parts by weight of the propylene random block copolymer (A-11) produced in Production Example 14 was substituted for 100 parts by weight the propylene random block copolymer (A-9), the production was carried out similarly to example 4. Physical properties of the molded articles are shown in Table 8.

## EXAMPLE 7

Except that, in example 4, 100 parts by weight of the propylene random block copolymer (A-12) produced in Production Example 15 was substituted for 100 parts by weight the propylene random block copolymer (A-9), the production was carried out similarly to example 4. Physical properties of the molded articles are shown in Table 8.

## COMPARATIVE EXAMPLE 13

Except that, in example 4, 100 parts by weight of the propylene random block copolymer (A-13) produced in Production Example 16 was substituted for 100 parts by weight the propylene random block copolymer (A-9), the

production was carried out similarly to example 4. Physical properties of the molded articles are shown in Table 8.

**[COMPARATIVE EXAMPLE 14]**

Except that, in example 4, 100 parts by weight of the propylene random block copolymer (A-14) produced in Production Example 17 was substituted for 100 parts by weight the propylene random block copolymer (A-9), the production was carried out similarly to example 4. Physical properties of the molded articles are shown in Table 8.

**[COMPARATIVE EXAMPLE 15]**

Except that, in example 4, 100 parts by weight of the propylene-ethylene random copolymer (R-3) produced in Production Example 18 was substituted for 100 parts by weight the propylene random block copolymer (A-9), the production was carried out similarly to example 4. Physical properties of the molded articles are shown in Table 8.

**[COMPARATIVE EXAMPLE 16]**

Except that, in example 4, 100 parts by weight of the propylene-ethylene random copolymer (R-4) produced in Production Example 19 was substituted for 100 parts by weight the propylene random block copolymer (A-9), the production was carried out similarly to example 4. Physical properties of the molded articles are shown in Table 8.

**[COMPARATIVE EXAMPLE 17]**

Except that, in example 4, 100 parts by weight of the propylene random block copolymer (A-15) produced in Production Example 20 was substituted for 100 parts by weight the propylene random block copolymer (A-9), the production was carried out similarly to example 4. Physical properties of the molded articles are shown in Table 8.

**[COMPARATIVE EXAMPLE 18]**

Except that, in example 4, 100 parts by weight of the propylene-ethylene random copolymer (R-5) produced in Production Example 21 was substituted for 100 parts by weight the propylene random block copolymer (A-9), the production was carried out similarly to example 4. Physical properties of the molded articles are shown in Table 8.

[Table 8]

Table 8

| | | Example 4 | Example 5 | Example 6 | Example 7 | Comparative Example 13 | Comparative Example 14 | Comparative Example 15 | Comparative Example 16 | Comparative Example 17 | Comparative Example 18 |
|---|---|---|---|---|---|---|---|---|---|---|---|
| Propylene Copolymer | | A-9 | A-10 | A-11 | A-12 | A-13 | A-14 | R-3 | R-4 | A-15 | R-5 |
| Pellet | MFR (g/10 min) | 17 | 15 | 21 | 18 | 15 | 50 | 26 | 21 | 15 | 20 |
| | Tm (°C) | 143 | 143 | 149 | 149 | 143 | 143 | 143 | 125 | 147 | 147 |
| Product | Izod impact strength 23°C (J/m) | 65 | 241 | 59 | 244 | 620 | 50 | 26 | 58 | 270 | 46 |
| | High-speed surface impact strength 0°C (J) | 0.4 | 1.2 | 0.4 | 7.6 | 14.0 | 0.3 | 0.3 | 0.3 | 20 | 0.3 |
| | Heat deformation temperature (°C) | 100 | 95 | 110 | 103 | 95 | 93 | 116 | 80 | 68 | 95 |
| | HAZE(%) | 21 | 20 | 25 | 24 | 38 | 21 | 29 | 22 | 21 | 23 |

**EXAMPLE 8**

To 100 parts by weight of a combination consisting of 95 parts by weight of the propylene random block copolymer (A-11) produced in Production Example 14 and 5 parts by weight of a polyethylene resin (trademark: Evolue SP0510, produced by Prime Polymer Co., Ltd.), 0.3 parts by weight of a nucleating agent Adekastab NA21 (trademark, produced by Adeka Corporation), 0.1 parts by weight of a heat stabilizer IRGANOX 1010 (trademark, produced by Ciba-Geigy Corp.), 0.1 parts by weight of a heat stabilizer IRGAFOS 168 (trademark, produced by Ciba-Geigy Corp.) and 0.1 parts by weight of calcium stearate were blended in a tumbler mixer, and melted and kneaded by use of a twin screw extruder to prepare a pelletized polypropylene resin composition, which was formed into an ASTM test specimen and a square plate (for measurement of the HAZE and high-speed surface impact) by use of an injection molding machine. Mechanical properties of the molded articles are shown in Table 9.

**<Melting and Kneading Conditions>**

Corotating twin screw kneader: Product Number NR2-36, produced by Nakatani Kikai
Kneading temperature: 190°C
Number of revolutions of screw: 200 rpm
Number of revolutions of feeder: 400 rpm

**<Injection Molding Conditions for ASTM Test Specimen>**

Injection molding machine: Product Number IS100, produced by Toshiba Machine Co., Ltd.
Cylinder temperature: 190°C
Mold temperature: 40°C

**<Injection Molding Conditions for Square Plate>**

Injection molding machine: Product Number AUTOSHOT T series MODEL 100D, produced by FANUC Co., Ltd.
Cylinder temperature: 210°C
Mold temperature: 40°C

**EXAMPLE 9**

To 100 parts by weight of a combination consisting of 80 parts by weight of the propylene-ethylene random copolymer (R-3) produced in Production Example 18 and 20 parts by weight of a polyethylene-ethylene random copolymer rubber (B-a-1) produced in Production Example 22, 0.3 parts by weight of a nucleating agent Adekastab NA21 (trademark, produced by Adeka Corporation), 0.1 parts by weight of a heat stabilizer IRGANOX 1010 (trademark, produced by Ciba-Geigy Corp.), 0.1 parts by weight of a heat stabilizer IRGAFOS 168 (trademark, produced by Ciba-Geigy Corp.) and 0.1 parts by weight of calcium stearate were blended in a tumbler mixer, and melted and kneaded by use of a twin screw extruder to prepare a pelletized polypropylene resin composition, which was formed into an ASTM test specimen and a square plate (for measurement of the HAZE and high-speed surface impact) by use of an injection molding machine. Mechanical properties of the molded articles are shown in Table 9.

**<Melting and Kneading Conditions>**

Corotating twin screw kneader: Product Number NR2-36, produced by Nakatani Kikai
Kneading temperature: 190°C
Number of revolutions of screw: 200 rpm
Number of revolutions of feeder: 400 rpm

**<Injection Molding Conditions for ASTM Test Specimen>**

Injection molding machine: Product Number IS100, produced by Toshiba Machine Co., Ltd.
Cylinder temperature: 190°C
Mold temperature: 40°C

**<Injection Molding Conditions for Square Plate>**

Injection molding machine: Product Number AUTOSHOT T series MODEL 100D, produced by FANUC

[Table 9]

Table 9

| | | Example 8 | Example 9 |
|---|---|---|---|
| Propylene-ethylene Random Copolymer A-11 (PHR) | | 95 | - |
| Propylene-ethylene Random Copolymer R-3 (PHR) | | - | 80 |
| Propylene-ethylene Random Copolymer B-a-1 (PHR) | | - | 20 |
| Polyethylene Resin (C-3) (PHR) | | 5 | - |
| Pellet | MFR (g/10 min) | 19 | 18 |
| | Tm (°C) | 149 | 143 |
| Product | Izod Impact Strength (23°C) (J/m) | 110 | 220 |
| | High-speed Surface Impact Strength (0°C) (J) | 19.1 | 1.0 |
| | Heat Deformation Temperature (°C) | 108 | 97 |
| | HAZE (%) | 32 | 25 |

Mechanical properties of the injection molded articles of the propylene random block copolymer (A-11) and the propylene-ethylene random copolymer rubber (R-5) are compared and the results thereof are shown in Table 10.

The propylene random block copolymer (A-11) has, while having comparable transparency to that of the propylene-ethylene random copolymer rubber (R-5), higher impact resistance and heat deformation temperature. Therefrom, it is found that the propylene random block copolymer (A) of the invention is suitably applied to food containers and medical containers where heat resistant treatment is necessary and transparency and impact resistance are needed.

[Table 10]

Table 10

| | | Example 6 | Comparative Example 18 |
|---|---|---|---|
| Propylene Copolymer | | A-11 | R-5 |
| Pellet | MFR (g/10 min) | 21 | 20 |
| | Tm (°C) | 149 | 147 |
| Product | Izod Impact Strength (23°C) (J/m) | 59 | 46 |
| | High-speed Surface Impact Strength (0°C) (J) | 0.4 | 0.3 |
| | Heat Deformation Temperature (°C) | 110 | 95 |
| | HAZE (%) | 25 | 23 |

## INDUSTRIAL APPLICABILITY

The propylene random block copolymer (A) of the invention has properties that the n-decane insoluble portion ($D_{insol}$) has a low melting point and the n-decane soluble portion ($D_{sol}$) has a high molecular weight and a narrow composition distribution; accordingly, the propylene random block copolymer (A) or the propylene resin composition containing the propylene random block copolymer (A) is excellent in low temperature heat sealability, transparency, impact resistance and heat shrinkage in a film application, and excellent in heat resistance, rigidity and impact resistance in applications to injection molding, injection stretch blow molding and hollow molding. Accordingly, the propylene random block copolymer (A) of the invention or the propylene resin composition is suitably used in various kinds of molding applications such as various kinds of packaging low temperature sealants, food packaging retort films, heat shrinkage films, heat shrinkage labels, surface protective adhesive films, medical packaging films, medical containers, food containers, and beverage containers.

## Claims

1. A propylene random block copolymer (A) that is a propylene block copolymer having a melt flow rate of from 0.1 to 100 g/10 min and a melting point in the range of from 100 to 155°C, comprising:

    90 to 60% by weight of a portion insoluble in n-decane at room temperature ($D_{insol}$); and 10 to 40% by weight of a portion soluble in n-decane at room temperature ($D_{sol}$), wherein the $D_{insol}$ satisfies requirements (1) through (3) and the $D_{sol}$ satisfies requirements (4) through (6);
    (1) the molecular weight distribution (Mw/Mn) obtained by GPC of the $D_{insol}$ is from 1.0 to 3.5,
    (2) the content of skeletons derived from ethylene in the $D_{insol}$ is from 0.5 to 13% by mole,
    (3) the total amount of 2,1- and 1,3-propylene units in the $D_{insol}$ is 0.2% by mole or less,
    (4) the molecular weight distribution (Mw/Mn) obtained by GPC of the $D_{sol}$ is from 1.0 to 3.5,
    (5) the intrinsic viscosity [η] in decalin at 135°C of the $D_{sol}$ is from 1.5 to 4 dl/g and
    (6) the content of skeletons derived from ethylene in the $D_{sol}$ is from 15 to 25% by mole.

2. The propylene random block copolymer (A) according to claim 1, wherein the propylene block copolymer is formed by polymerization by use of a metallocene catalyst system.

3. A composition comprising the propylene random block copolymer (A) according to claim 1 and a nucleating agent (D) in an amount of from 0.05 to 0.5 parts by weight based on 100 parts by weight of the propylene random block copolymer (A).

4. A propylene resin composition, comprising the propylene random block copolymer (A) according to claim 1 or 2; and an elastomer (B) and/or a polyethylene resin (C).

5. The propylene resin composition according to claim 4, wherein the elastomer (B) in an amount of from 0 to 50 parts by weight and the polyethylene resin (C) in an amount of from 0 to 50 parts by weight are blended with 100 parts by weight of the propylene random block copolymer (A) (the amounts of the elastomer (B) and polyethylene resin (C) are not simultaneously zero part by weight).

6. The propylene resin composition according to claim 4, further comprising a nucleating agent (D) in an amount of from 0.05 to 0.5 parts by weight based on 100 parts by weight of the propylene random block copolymer (A) according to claim 1.

7. A propylene resin composition, comprising 100 parts by weight of the propylene resin composition of claim 4 and 0.05 to 0.5 parts by weight of a nucleating agent (D).

8. A sheet or film that is prepared from the propylene random block copolymer or propylene resin composition according to any one of claims 1 through 7.

9. The sheet or film of claim 8 that is a sealant film,
    a sealant film for retort film.
    an adhesive film or
    a surface protective film.

**10.** An injection molded article that is prepared from the propylene random block copolymer (A) or propylene resin composition according to any one of claims 1 through 7.

**11.** A hollow molded article that is prepared from the propylene random block copolymer (A) or propylene resin composition according to any one of claims 1 through 7.

**12.** An injection blow molded article that is prepared from the propylene random block copolymer (A) or propylene resin composition according to any one of claims 1 through 7.

**13.** A molded article for a food container, which is comprised of the propylene random block copolymer (A) or propylene resin composition according to any one of claims 1 through 7.

**14.** A molded article for a medical instrument, which is comprised of the propylene random block copolymer (A) or propylene resin composition according to any one of claims 1 through 7.

**15.** A fiber that is prepared from the propylene random block copolymer (A) or propylene resin composition according to any one of claims 1 through 7.

## Patentansprüche

**1.** Statistisches Propylen-Blockcopolymer (A), das ein Propylen-Blockcopolymer mit einer Schmelzfließrate von 0,1 bis 100 g/10 Min. und einem Schmelzpunkt im Bereich von 100 bis 155 °C ist, umfassend:
90 bis 60 Gewichtsprozent eines Teils, der bei Raumtemperatur in n-Decan unlöslich ist ($D_{unlös}$); und 10 bis 40 Gewichtsprozent eines Teils, der bei Raumtemperatur in n-Decan löslich ist ($D_{lös}$), wobei das $D_{unlös}$ die Anforderungen (1) bis (3) erfüllt und das $D_{lös}$ die Anforderungen (4) bis (6) erfüllt;

(1) die durch GPC des $D_{unlös}$ erlangte Molekulargewichtsverteilung (Mw/Mn) von 1,0 bis 3,5 ist,
(2) der Gehalt an Gerüsten in dem $D_{unlös}$, die von Ethylen abgeleitet sind, 0,5 bis 13 Mol-% ist,
(3) die Gesamtmenge an 2,1- und 1,3-Propyleneinheiten in dem $D_{unlös}$ 0,2 Mol-% oder weniger ist,
(4) die durch GPC des $D_{lös}$ erlangte Molekulargewichtsverteilung (Mw/Mn) 1,0 bis 3,5 ist,
(5) die intrinsische Viskosität [η] in Decalin bei 135 °C des $D_{lös}$ von 1,5 bis 4 dl/g ist, und
(6) der Gehalt an Gerüsten in dem $D_{lös}$, die von Ethylen abgeleitet sind, 15 bis 25 Mol-% ist,

**2.** Statistisches Propylen-Blockcopolymer (A) nach Anspruch 1, wobei das Propylen-Blockcopolymer durch Polymerisation unter Verwendung eines Metallocen-Katalysatorsystems gebildet wird.

**3.** Zusammensetzung, umfassend das statistische Propylen-Blockcopolymer (A) nach Anspruch 1 und ein Nukleierungsmittel (D) in einer Menge von 0,05 bis 0,5 Gewichtsteilen, bezogen auf 100 Gewichtsteile des statistischen Propylen-Blockcopolymers (A).

**4.** Propylenharz-Zusammensetzung, umfassend das statistische Propylen-Blockcopolymer (A) nach Anspruch 1 oder 2; und ein Elastomer (B) und/oder ein Polyethylenharz (C).

**5.** Propylenharz-Zusammensetzung nach Anspruch 4, wobei das Elastomer (B) in einer Menge von 0 bis 50 Gewichtsteilen und das Polyethylenharz (C) in einer Menge von 0 bis 50 Gewichtsteilen mit 100 Gewichtsteilen des statistischen Propylen-Blockcopolymers (A) gemischt sind (die Mengen des Elastomers (B) und des Polyethylenharzes (C) sind nicht gleichzeitig Null Gewichtsteile).

**6.** Propylenharz-Zusammensetzung nach Anspruch 4, ferner umfassend ein Nukleierungsmittel (D) in einer Menge von 0,05 bis 0,5 Gewichtsteilen, bezogen auf 100 Gewichtsteile des statistischen Propylen-Blockcopolymers (A) nach Anspruch 1.

**7.** Propylenharz-Zusammensetzung, umfassend 100 Gewichtsteile der Propylenharz-Zusammensetzung nach Anspruch 4 und 0,05 bis 0,5 Gewichtsteile eines Nukleierungsmittels (D).

**8.** Folie oder Film, die aus dem statistischen Propylen-Blockcopolymer oder der Propylenharz-Zusammensetzung nach einem der Ansprüche 1 bis 7 hergestellt ist.

9. Blatt oder Folie nach Anspruch 8, die eine Versiegelungsfolie ist,
eine Versiegelungsfolie für Retortenfolie.
eine Klebefolie oder
ein Oberflächenschutzfilm.

10. Spritzgussgegenstand, der aus dem statistischen Propylen-Blockcopolymer (A) oder der Propylenharz-Zusammensetzung nach einem der Ansprüche 1 bis 7 hergestellt ist.

11. Hohlformgegenstand, der aus dem statistischen Propylen-Blockcopolymer (A) oder der Propylenharz-Zusammensetzung nach einem der Ansprüche 1 bis 7 hergestellt ist.

12. Spritzblasgeformter Gegenstand, der aus dem statistischen Propylen-Blockcopolymer (A) oder der Propylenharz-Zusammensetzung nach einem der Ansprüche 1 bis 7 hergestellt ist.

13. Geformter Gegenstand für einen Lebensmittelbehälter, der das statistische Propylen-Blockcopolymer (A) oder die Propylenharz-Zusammensetzung nach einem der Ansprüche 1 bis 7 umfasst.

14. Geformter Gegenstand für ein medizinisches Instrument, der das statistische Propylen-Blockcopolymer (A) oder die Propylenharz-Zusammensetzung nach einem der Ansprüche 1 bis 7 umfasst.

15. Faser, die aus dem statistischen Propylen-Blockcopolymer (A) oder der Propylenharz-Zusammensetzung nach einem der Ansprüche 1 bis 7 hergestellt ist.

## Revendications

1. Copolymère séquencé aléatoire de propylène (A) qui est un copolymère séquencé de propylène ayant un indice fluage de 0,1 à 100 g/10 min et un point de fusion dans la plage de 100 à 155 °C, comprenant :
90 à 60 % en poids d'une partie insoluble dans le n-décane à température ambiante ($D_{insol}$) ; et 10 à 40 % en poids d'une partie soluble dans le n-décane à température ambiant ($D_{sol}$), $D_{insol}$ satisfaisant les exigences (1) à (3) et $D_{sol}$ satisfaisant les exigences (4) à (6) ;

   (1) la distribution de poids moléculaire (Mw/Mn) obtenue par GPC de $D_{insol}$ étant de 1,0 à 3,5,
   (2) la teneur en squelettes dérivés de l'éthylène dans $D_{insol}$ étant de 0,5 à 13 % en moles,
   (3) la quantité totale de motifs 2,1- et 1,3-propylène dans $D_{insol}$ étant de 0,2 % en moles ou moins,
   (4) la distribution de poids moléculaire (Mw/Mn) obtenue par GPC de $D_{sol}$ étant de 1,0 à 3,5,
   (5) la viscosité intrinsèque [η] dans la décaline à 135 °C de $D_{sol}$ étant de 1,5 à 4 dl/g et
   (6) la teneur en squelettes dérivés de l'éthylène dans $D_{sol}$ étant de 15 à 25 % en moles.

2. Copolymère séquencé aléatoire de propylène (A) selon la revendication 1, le copolymère séquencé de propylène est formé par polymérisation à l'aide d'un système catalytique au métallocène.

3. Composition comprenant le copolymère séquencé aléatoire de propylène (A) selon la revendication 1 et un agent de nucléation (D) dans une quantité de 0,05 à 0,5 partie en poids sur la base de 100 parties en poids du copolymère séquencé aléatoire de propylène (A).

4. Composition de résine de propylène, comprenant le copolymère séquencé aléatoire de propylène (A) selon la revendication 1 ou 2 ; et un élastomère (B) et/ou une résine de polyéthylène (C).

5. Composition de résine de propylène selon la revendication 4, dans laquelle l'élastomère (B) dans une quantité de 0 à 50 parties en poids et la résine de polyéthylène (C) dans une quantité de 0 à 50 parties en poids sont mélangés avec 100 parties en poids de copolymère séquencé aléatoire de propylène (A) (les quantités de l'élastomère (B) et de la résine de polyéthylène (C) n'étant pas simultanément zéro partie en poids).

6. Composition de résine de propylène selon la revendication 4, comprenant en outre un agent de nucléation (D) dans une quantité de 0,05 à 0,5 partie en poids sur la base de 100 parties en poids du copolymère séquencé aléatoire de propylène (A) selon la revendication 1.

7. Composition de résine de propylène, comprenant 100 parties en poids de la composition de résine de propylène de la revendication 4 et 0,05 à 0,5 partie en poids d'un agent de nucléation (D).

8. Feuille ou film qui est préparé à partir du copolymère séquencé aléatoire de propylène ou de la composition de résine de propylène selon l'une quelconque des revendications 1 à 7.

9. Feuille ou film de la revendication 8 qui est un film d'étanchéité,
un film d'étanchéité pour un film d'autoclave,
un film adhésif, ou
un film de protection de surface.

10. Article moulé par injection qui est préparé à partir du copolymère séquencé aléatoire de propylène (A) ou de la composition de résine de propylène selon l'une quelconque des revendications 1 à 7.

11. Article moulé creux qui est préparé à partir du copolymère séquencé aléatoire de propylène (A) ou de la composition de résine de propylène selon l'une quelconque des revendications 1 à 7.

12. Article moulé par soufflage par injection qui est préparé à partir du copolymère séquencé aléatoire de propylène (A) ou de la composition de résine de propylène selon l'une quelconque des revendications 1 à 7.

13. Article moulé pour un contenant alimentaire, qui comprend le copolymère séquencé aléatoire de propylène (A) ou la composition de résine de propylène selon l'une quelconque des revendications 1 à 7.

14. Article moulé pour un instrument médical, qui comprend le copolymère séquencé aléatoire de propylène (A) ou la composition de résine de propylène selon l'une quelconque des revendications 1 à 7.

15. Fibre qui est préparée à partir du copolymère séquencé aléatoire de propylène (A) ou de la composition de résine de propylène selon l'une quelconque des revendications 1 à 7.

[FIG. 1]

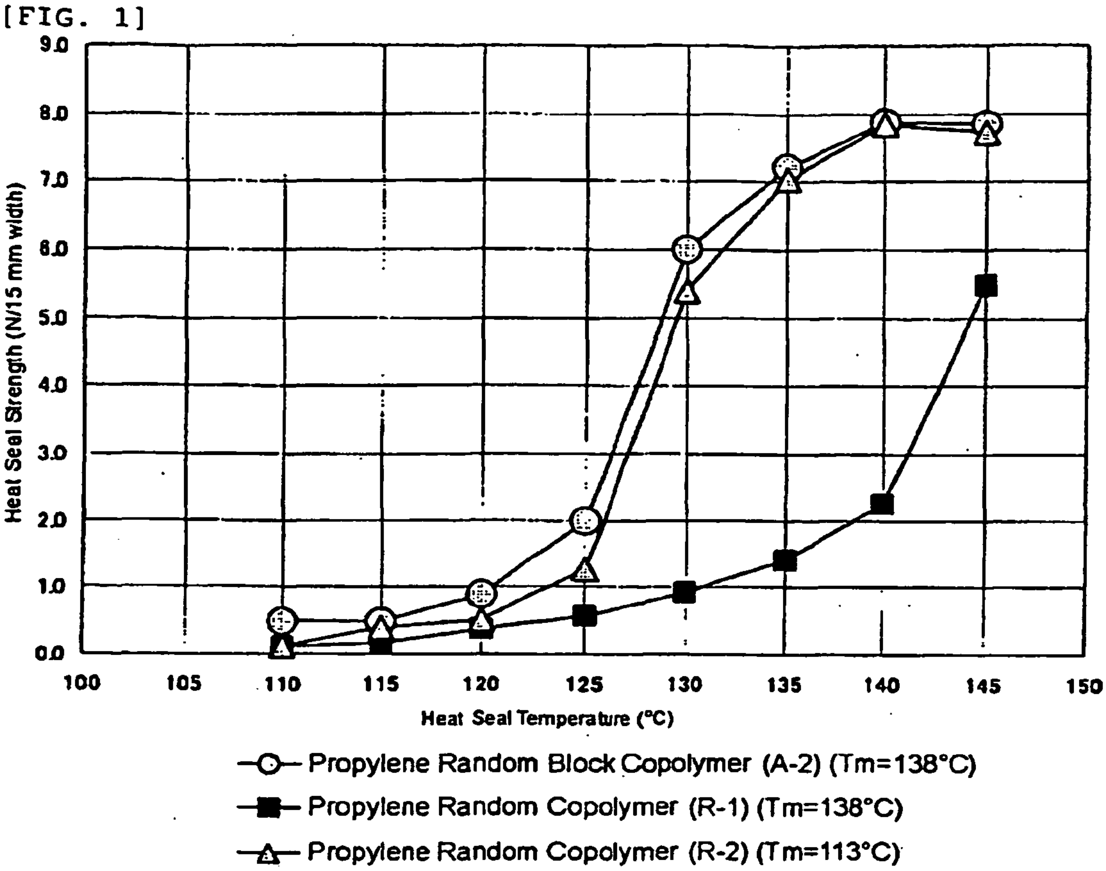

9.0
8.0
7.0
6.0
5.0
4.0
3.0
2.0
1.0
0.0
Heat Seal Strength (N/15 mm width)
100
105
110
115
120
125
130
135
140
145
150
Heat Seal Temperature (°C)
Propylene Random Block Copolymer (A-2) (Tm=138°C)
Propylene Random Copolymer (R-1) (Tm=138°C)
Propylene Random Copolymer (R-2) (Tm=113°C)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H02173016 B
- JP 2002249167 A
- JP H06192332 B
- JP 2005529227 A
- JP 2005132979 A
- WO 0127124 A
- JP H11315109 B
- JP S4023798 B
- JP S428704 B
- JP S436636 B
- JP S4620814 B
- JP H07145212 B
- WO 200408775 A
- WO 2006068308 A